(19) **Europäisches Patentamt / European Patent Office / Office européen des brevets**

(11) **EP 3 487 938 B1**

(12) # EUROPEAN PATENT SPECIFICATION

(45) Date of publication and mention of the grant of the patent:
**16.02.2022 Bulletin 2022/07**

(21) Application number: **17742236.7**

(22) Date of filing: **20.07.2017**

(51) International Patent Classification (IPC):
**C09C 1/02** (2006.01)

(52) Cooperative Patent Classification (CPC):
**C09C 1/021;** C01P 2004/61; C01P 2006/11; C01P 2006/12

(86) International application number:
**PCT/EP2017/068319**

(87) International publication number:
**WO 2018/019692 (01.02.2018 Gazette 2018/05)**

(54) **POST TREATMENT OF SURFACE-REACTED CALCIUM CARBONATE WITH DIFFERENT FUNCTIONAL CATIONS**

NACHBEHANDLUNG VON OBERFLÄCHENREAKTIVEM CALCIUMKARBONAT MIT VERSCHIEDENEN FUNKTIONELLEN KATIONEN

POST-TRAITEMENT DE CARBONATE DE CALCIUM TRAITÉ PAR RÉACTION EN SURFACE AVEC DES CATIONS FONCTIONNELS DIFFÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2016 EP 16181075**
**01.08.2016 US 201662369287 P**

(43) Date of publication of application:
**29.05.2019 Bulletin 2019/22**

(73) Proprietor: **Omya International AG**
**4665 Oftringen (CH)**

(72) Inventors:
• **RENTSCH, Samuel**
**3095 Spiegel bei Bern (CH)**
• **WELKER, Matthias**
**68220 Hésingue (FR)**
• **URWYLER, Simon**
**3012 Bern (CH)**

• **GLAUBITZ, Joachim**
**6264 Pfaffnau (CH)**
• **KNUPFER, Martina Elisabeth**
**6343 Rotkreuz (CH)**
• **GANE, Patrick A.C.**
**4852 Rothrist (CH)**

(74) Representative: **Glas, Holger**
**Maiwald Patentanwalts- und Rechtsanwaltsgesellschaft mbH**
**Elisenhof**
**Elisenstraße 3**
**80335 München (DE)**

(56) References cited:
**EP-A1- 2 264 109     EP-A1- 2 719 376**
**EP-A1- 2 921 173**

• **P. PAPADOPOULOS, D.L.ROWELL: "The reactions of copper and zinc with calcium carbonate surfaces", JOURNAL OF SOIL SCIENCE, vol. 40, 1 January 1989 (1989-01-01), pages 39-48, XP002766792,**

**Description**

The present invention refers to a process for the surface-treatment of a surface-reacted calcium carbonate, to a surface-treated surface-reacted calcium carbonate obtainable by the process according to the present invention, as well as to a composition comprising the surface-treated surface-reacted calcium carbonate according to the present invention, to the use of at least one surface-reacted calcium carbonate for immobilizing at least one water soluble metal salt, water soluble metal hydroxide, water soluble metal oxide or mixtures thereof on the surface of the at least one surface-reacted calcium carbonate, the use of a surface-treated surface-reacted calcium carbonate according to the present invention as preservative, for the control of odour and/or for enhancing and/or mediating antimicrobial activity of a substrate and an article comprising the surface-treated surface-reacted calcium carbonate according to the present invention.

Surface-treating or coating of or absorption on particulate materials are well known strategies in chemistry especially in the finishing and refinement of particulate materials. The aim of these strategies is to locate surface-treatment agents on the surface of these particulate materials in order to modify or improve the characteristics of these particulate materials, for example to improve hydrophobicity/hydrophilicity or acid-resistance. Another aim is to locate surface-treatment agents on the surface of these particulate materials in order to use them as carrier material.

For example, EP 1 084 203 refers to composite compositions comprising at least two mineral or organic fillers or pigments and at least one binding agent. The mineral or organic fillers or pigments have undergone a physical or chemical treatment such that they have at least one organophilic site.

EP 2 029 675 refers to composites of inorganic and/or organic microparticles and nano-calcium carbonate particles. The surface of these particulate materials is coated with the help of binders.

The article "Index of refraction enhancement of calcite particles coated with zinc carbonate" by Kathleen Lattaud et al., Solid State Science, volume 8, issue 10, 2006, pages 1222 - 1228 refers to $ZnCO_3$ coating on calcite particles. More precisely, the chemical reaction between calcite particles in an aqueous suspension with zinc chloride promotes the formation of a $ZnCO_3$ coating consisting of two layers with different interactions with the calcite particle. The obtained composite particles have an enhanced refraction index.

EP 2 921 173 relates to surface-reacted calcium carbonate, wherein the surface-reacted calcium carbonate is a reaction product of natural or synthetic calcium carbonate with carbon dioxide and at least one acid. Said calcium carbonate and oral compositions containing the same can be used as a medicament, and especially in treating dentine hypersensitivity.

The article "The reactions of copper and zinc with calcium carbonate surfaces" by P.Papadopoulus et al., Journal of Soil Science, 1989, 40, 39-48 refers to the reaction of copper and zinc by adding the metal nitrate to a 4 g:50 ml suspension of calcite and water which had been equilibrated for two days.

One field of application of such particulate carriers is, for example, odour control. One source of malodours, for example, is any kind of waste human and animal bodily excretions, liquids and secretions. However, there are also other sources of unpleasant odours which require to be controlled, such as those caused by food, e.g. from dairy products, meat and fish.

As regards human or animal body liquids, there is a continuous need to control odour, and constant development to meet that need, e.g. in the field of personal hygiene articles such as sanitary napkins, panty liners, adult incontinence articles, infant diapers, paper towels, bath tissue and facial tissue, non wovens for medical purposes etc. Such articles are often used to absorb and retain bodily fluids and other exudates excreted by the human body.

For example, US 2012/0202684 refers to metal ion modified high surface area materials for odour control. The high surface area materials such as nanoparticles are coated with the metal ions by absorbing the metal ions on the surface of the nanoparticles. The obtained suspension is used for odour control, for example by mixing the suspension comprising the nanoparticles coated with the metal ions with furfuryl mercaptan solutions.

Another field of application of such particulate carriers is, for example, the use as antimicrobial agents or additives.

However, it is not only important that the surface of the particulate material can be treated by a cheap, simple and non time-consuming process but it is also important that the attachment of the surface-treatment agent on the surface of the particulate material is strong or stable. By the processes known in the prior art the surface-treatment agents, for example the metal ions very often are attached very weakly by absorption to the surfaces of the treated material and, therefore, these surface-treatment agents can be washed off, at least partially, in a simple washing step. Therefore, the surface-treated material may at least partially, for example, lose its ability to control odour and/or enhance antimicrobial activity. Furthermore, if the surface-treatment agents can be easily washed off the surface-treated material the modified or improved characteristics of the particulate material, for example the hydrophobicity/hydrophilicity or acid-resistance is reduced or lost.

This is particularly problematic if the surface-treated particulate material is used in the field of personal hygiene articles such as sanitary napkins, panty liners, adult incontinence articles, infant diapers, paper towels, bath tissue and facial tissue, non wovens for medical purposes etc. that will come into contact with the human body. By watery excretions like urine, blood or sweat the surface-treatment agent, for example the metal ions can be washed off from the particulate material and will get into contact with the skin or can enter the human body through open wounds.

The same also applies to, for example, surface-treated particulate materials that are used to control unpleasant odours such as those caused by food, e.g. from dairy products, meat and fish and/or are used to confer or enhance antimicrobial activity, for example in packaging products for food. If the surface-treated particulate materials come in contact with the food products like meat and fish watery evaporations like meat juices can wash off the surface-treatment agent, for example the metal ions from the particulate materials. Therefore, the surface-treatment agents, for example the metal ions may be taken up with this food and, therefore, enter the human body orally.

In view of the aforementioned problems, there is a continuous need for a process for providing a surface-treated particulate material wherein the surface-treatment agent is effectively immobilized on the surface of the particulate material and, therefore, is attached stronger to the surface of the particulate material compared to surface-treated particulate materials prepared by conventional processes where the surface-treatment agent is e.g. merely absorbed on the surface of the particulate material.

A further object is to provide a process for preparing a surface-treated particulate material that can be carried out under cost-efficient, time-saving and ecological conditions, i.e. by avoiding or reducing the use of organic solvents.

It is also an object of the present invention to provide a material which can control microbial contamination but does not represent a hazard to health. It is a further object of the present invention to provide a material which, besides the antimicrobial activity, has additional benefits. For example, it would be desirable that such a material confers or enhances the antimicrobial activity of a product, in which it is incorporated, over an extended period without affecting the properties of the product in a negative way. Further objects can be gathered from the following description of the invention.

The foregoing and other objects are solved by the subject-matter as defined herein in claim 1.

According to one aspect of the present invention a process for the surface-treatment of a surface-reacted calcium carbonate is provided, comprising the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate.

The inventors have surprisingly found out that by the foregoing process it is possible to prepare surface-treated particulate material, more precisely surface-treated surface-reacted calcium carbonate with improved properties. Especially, it is possible by the foregoing process to prepare surface-treated surface-reacted calcium carbonate wherein the surface-treatment agent is immobilized on the pore surface and externally of the surface-reacted calcium carbonate and, therefore, the reaction products obtained from the surface-treatment agent, namely the at least one water soluble metal salt with the surface-reacted calcium carbonate are attached stronger to the surface of the surface-reacted calcium carbonate than compared to conventional particulate materials wherein the reaction products of the surface-treatment agent with the surface-reacted calcium carbonate are merely absorbed into the pores, or are coated or adsorbed onto the internal or external surface of the particulate material.

Furthermore, the inventors found that the process according to the present invention can be performed in water and, therefore, organic solvents can be reduced or avoided in the inventive process. Furthermore, the process according to the present invention can be prepared by mixing the educts and, therefore, time-consuming and expensive intermediate steps can be avoided.

According to another aspect of the present invention a surface-treated surface-reacted calcium carbonate is obtained by the process according to the present invention.

According to another aspect of the present invention a composition comprising a surface-treated surface-reacted calcium carbonate obtainable by the process according to the present invention is provided.

According to another aspect of the present invention at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source, is used for immobilizing at least one water soluble metal salt on the pore surface and externally on the surface of the at least one surface-reacted calcium carbonate by preparing at least one surface-treated surface-reacted calcium carbonate in accordance with the process of the present invention.

According to still a further aspect of the present invention use of a surface-treated surface-reacted calcium carbonate according to the present invention or a composition according to the present invention as preservative, for the control of odor, and/or for enhancing and/or mediating antimicrobial activity of a substrate is provided.

According to still a further aspect of the present invention use of a surface-treated surface-reacted calcium carbonate according to the present invention or a composition according to the present invention in polymer applications, paper coating applications, paper making, paints, coatings, sealants, printing inks, adhesives, food, feed, pharmaceuticals, concrete, cement, cosmetics, water treatment, engineered wood applications, plasterboard applications, packaging applications and/or agricultural applications is provided.

According to still a further aspect of the present invention an article comprising a surface-treated surface-reacted calcium carbonate according to the present invention or a composition according to the present invention, wherein the article is selected from paper products, engineered wood products, plasterboard products, polymer products, hygiene products, medical products, healthcare products, filter products, woven materials, nonwoven materials, geotextile products, agriculture products, horticulture products, clothing, footwear products, baggage products, household products, industrial products, packaging products, building products, and construction products is provided.

Advantageous embodiments of the present invention are defined in the corresponding sub-claims.

According to one embodiment of the present invention the surface-reacted calcium carbonate of step (i) has

(a) a specific surface area of from 15 $m^2$/g to 200 $m^2$/g, preferably from 27 $m^2$/g to 180 $m^2$/g, more preferably from 25 $m^2$/g to 160 $m^2$/g, and most preferably from 30 $m^2$/g to 150 $m^2$/g, measured using nitrogen and the BET method according to ISO 9277, and/or
(b) a volume median grain diameter $d_{50}$(vol) of from 1 to 75 $\mu$m, preferably from 1.3 to 50 $\mu$m, more preferably from 1.5 to 40 $\mu$m, even more preferably from 1.8 to 30 $\mu$m, and most preferably from 2 to 15 $\mu$m, and/or
(c) a grain diameter $d_{98}$(vol) of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m, and/or
(d) an intra-particle intruded specific pore volume in the range from 0.1 to 2.3 $cm^3$/g, more preferably from 0.2 to 2.0 $cm^3$/g, especially preferably from 0.4 to 1.8 $cm^3$/g and most and preferably from 0.6 to 1.6 $cm^3$/g, calculated from mercury porosimetry measurement.

According to another aspect of the present invention the surface-reacted calcium carbonate of step (i) has

(a) a specific surface area of from 30 $m^2$/g to 150 $m^2$/g, measured using nitrogen and the BET method according to ISO 9277, and
(b) a volume median grain diameter $d_{50}$(vol) of from 2 to 15 $\mu$m, and optionally
(c) a grain diameter $d_{98}$(vol) of from 10 to 30 $\mu$m, and optionally
(d) an intra-particle intruded specific pore volume in the range from 0.6 to 1.6 $cm^3$/g, calculated from mercury porosimetry measurement.

According to another aspect of the present invention the surface-reacted calcium carbonate of step (i) is provided in dry form, preferably in powder form or is provided in form of a suspension, preferably in form of an aqueous suspension wherein the solids content of the surface-reacted calcium carbonate is within the range of from 1 to 80 wt.-%, more preferably from 3 to 70 wt.-%, and even more preferably from 5 to 60 wt.-%, based on the total weight of the aqueous suspension.

According to another aspect of the present invention the surface-reacted calcium carbonate of step (i) is provided in form of an aqueous suspension that further comprises a dispersing agent.

According to another aspect of the present invention the surface-reacted calcium carbonate of step (i) is heated to a temperature in the range from 20 to 250 °C, preferably from 25 to 180 °C, even more preferably from 50 to 150 °C and most preferably from 80 to 130 °C prior or during to the contacting step (v).

According to another aspect of the present invention the at least one water soluble metal salt of step (ii) is selected from the group consisting of a copper salt, zinc salt, silver salt and mixtures thereof, even more preferably is a copper salt selected from the group consisting of copper nitrate, copper sulphate, copper acetate, copper chloride, copper fluoride, copper bromide, hydrates thereof and mixtures thereof, and most preferably is selected from the group consisting of copper sulphate, hydrates thereof and mixtures thereof.

According to another aspect of the present invention the aqueous solvent of step (iii) consists of water.

According to another aspect of the present invention the metal containing solution obtained in step (iv) has a solids content from 1 to 80 wt.-%, preferably from 5 to 60 wt.-% and most preferably from 10 to 50 wt.-%, based on the total weight of the metal salt solution.

According to another aspect of the present invention the at least one metal salt is added to the at least one surface-reacted calcium carbonate in an amount from 0.001 to 80 wt.-%, preferably from 0.01 to 60 wt.-%, more preferably from 0.05 to 50 wt.-%, and most preferably from 1 to 40 wt.-% based on the total dry weight of the at least one surface-reacted calcium carbonate.

According to another aspect of the present invention the contacting step (v) is performed by mixing and/or by spraying.

According to another aspect of the present invention the mixture obtained from step (v) is heated in step (vi) to a temperature in the range from 60 to 160 °C, even more preferably from 80 to 150 °C and most preferably from 90 to 130 °C.

According to another aspect of the present invention before and/or during step (v) a base in form of an aqueous solution or aqueous suspension is added to the at least one surface-reacted calcium carbonate of step (i), wherein the base preferably comprises carbonate ions and most preferably the base is sodium carbonate.

According to another aspect of the present invention the base is added in an amount from 0.001 to 80 wt.-%, preferably from 0.01 to 60 wt.-%, more preferably from 0.05 to 50 wt.-%, and most preferably from 1 to 40 wt.-% based on the total dry weight of the at least one surface-reacted calcium carbonate.

According to another aspect of the present invention the surface-treated surface-reacted calcium carbonate obtained in step (vi) is in form of an aqueous suspension, the process further comprises a step (vii) of separating the surface-treated surface-reacted calcium carbonate obtained from step (vi) from the aqueous suspension after step (iv).

According to another aspect of the present invention the process further comprises a step of grinding and/or fractionating and/or classifying the mixture obtained from step (v) before, during or after step (vi).

According to another aspect of the present invention the process further comprises a step wherein the surface-treated surface-reacted calcium carbonate formed in step (vi) is post-treated, preferably after steps (vii), (viii), (ix) or (x), if present and preferably is post-treated with a fatty acid, e.g. stearic acid, a silane, or phosphoric esters of fatty acids, or a siloxane.

According to another aspect of the present invention the process further comprises a step (viii) of washing the surface-treated surface-reacted calcium carbonate obtained from step (vi) or step (vii), if present.

According to another aspect of the present invention the process further comprises a step (ix) of drying the surface-treated surface-reacted calcium carbonate after step (vi) or steps (vii) or (viii), if present, at a temperature in the range from 60 to 600 °C, preferably in the range from 80 to 550 °C.

According to another aspect of the present invention the process further comprises a step (x) of mechanically dewatering, preferably by centrifugation or filtration, the mixture obtained from step (v) before heating step (vi).

According to another aspect of the present invention the process is a batch or a continuous process, preferably a continuous process.

According to another aspect of the present invention the at least one water soluble metal salt of step (ii) is copper sulphate, hydrates thereof or mixtures thereof and/or the at least one water insoluble metal compound formed on the surface of the surface-reacted calcium carbonate is copper hydrogen phosphate hydrate ($CuHPO_4 \cdot H_2O$).

According to another aspect of the present invention the at least one water soluble metal salt of step (ii) is zinc sulphate and/or zinc chloride, hydrates thereof or mixtures thereof.

According to another embodiment of the present invention the surface-treated surface-reacted calcium carbonate has

(a) a specific surface area of from 15 m$^2$/g to 200 m$^2$/g, preferably from 27 m$^2$/g to 180 m$^2$/g, more preferably from 25 m$^2$/g to 160 m$^2$/g, and most preferably from 30 m$^2$/g to 150 m$^2$/g, measured using nitrogen and the BET method according to ISO 9277, and/or

(b) a volume median grain diameter $d_{50}$(vol) of from 1 to 75 $\mu$m, preferably from 1.3 to 50 $\mu$m, more preferably from 1.5 to 40 $\mu$m, even more preferably from 1.8 to 30 $\mu$m, and most preferably from 2 to 15 $\mu$m, and/or

(c) a grain diameter $d_{98}$(vol) of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m, and/or

(d) an intra-particle intruded specific pore volume in the range from 0.1 to 2.3 cm$^3$/g, more preferably from 0.2 to 2.0 cm$^3$/g, especially preferably from 0.4 to 1.8 cm$^3$/g and most and preferably from 0.6 to 1.6 cm$^3$/g, calculated from mercury porosimetry measurement.

According to another embodiment of the present invention the surface-treated surface-reacted calcium carbonate has

(a) a specific surface area of from 30 $m^2$/g to 150 $m^2$/g, measured using nitrogen and the BET method according to ISO 9277, and
(b) a volume median grain diameter $d_{50}$(vol) of from 2 to 15 $\mu$m, and optionally
(c) a grain diameter $d_{98}$(vol) of from 10 to 30 $\mu$m, and optionally
(d) an intra-particle intruded specific pore volume in the range from 0.6 to 1.6 $cm^3$/g, calculated from mercury porosimetry measurement.

According to another embodiment of the present invention the surface-treated surface-reacted calcium carbonate comprises at least one compound selected from the group consisting of copper hydrogen phosphate hydrate ($CuHPO_4 \cdot H_2O$), malachite ($Cu_2CO_3(OH)_2$), brochantite ($Cu_4SO_4(OH)_6$), deviline ($CaCu_4(SO_4)_2(OH)_6 \cdot 3H_2O$), posnjakite ($C_{U4}(SO_4)(OH)_6 \cdot H_2O$) and mixtures thereof as water insoluble metal compound formed on the surface of the surface-reacted calcium carbonate.

According to another embodiment of the present invention the surface-treated surface-reacted calcium carbonate comprises at least one insoluble zinc salt on the surface of the surface-reacted calcium carbonate.

According to another embodiment of the present invention the odorants are selected from the group consisting of amines such as triethylamine, diethylamine, trimethylamine, diaminobutane, tetramethylenediamine, pentamethylenediamine, pyridine, indole, 3-methylindole; carboxylic acids such as propionic acid, butanoic acid, 3-methylbutanoic acid, 2-methylpropanoic acid, hexanoic acid; sulphur organic compounds such as thiols, e.g. methanethiol, phosphor organic compounds such as methylphosphine, dimethylphosphine, their derivatives and mixtures thereof; preferably the odorants are amines and most preferably the odorant is diethylamine.

It should be understood that for the purposes of the present invention, the following terms have the following meanings:

The term "surface-treatment agent" according to the present invention is an agent that is used to treat the surface of the at least one surface-reacted calcium carbonate.

The surface-treatment agent of the present invention is a water soluble metal salt, wherein the water soluble metal salt is selected from the group consisting of a chromium salt, manganese salt, iron salt, cobalt salt, copper salt, zinc salt, silver salt and mixtures thereof.

A "surface-treated surface-reacted calcium carbonate" in the gist of the present invention comprises at least a surface-reacted calcium carbonate which has been contacted with at least one surface-treatment agent according to the present invention such as to obtain a treatment layer located on at least a part of the surface of the surface-reacted calcium carbonate. Accordingly, the term "treatment layer" refers to a layer comprising the surface treatment agent and reaction products thereof on at least a part of the surface of the surface-reacted calcium carbonate. The term "reaction products" in the meaning of the present invention refers to products obtained by contacting the at least one surface-reacted calcium carbonate with at least one surface-treatment agent according to the present invention. More precisely, the term "reaction products" at least comprises the water insoluble metal compounds formed from the metal provided as metal salt, metal hydroxide, metal oxide and mixtures thereof on the surface of the surface-reacted calcium carbonate. The reaction products of the surface treatment agent and the surface-reacted calcium carbonate are chemically or physically bonded to each other in the wet as well as dry state, which means that no segregation is observed.

The term "base" according to the present invention refers to a base as defined by the Bronsted-Lowry theory. Therefore, a base in the meaning of the present invention is a substance that can accept hydrogen ions ($H^+$)-otherwise known as protons.

A "calcium carbonate-comprising material" in the meaning of the present invention can be a mineral material or a synthetic material having a content of calcium carbonate of at least 50 wt.-%, preferably at least 75 wt.-%, more preferably at least 90 wt.-%, and most preferably at least 95 wt.-%, based on the total weight of the calcium carbonate-comprising material.

"Ground calcium carbonate" (GCC) in the meaning of the present invention is a calcium carbonate obtained from natural sources, such as limestone, marble, or chalk, and processed through a wet and/or dry treatment such as grinding, screening and/or fractionation, for example, by a cyclone or classifier.

"Precipitated calcium carbonate" (PCC) in the meaning of the present invention is a synthesized material, generally obtained by precipitation following a reaction of carbon dioxide and calcium hydroxide (hydrated lime) in an aqueous environment or by precipitation of a calcium- and a carbonate source in water. Additionally, precipitated calcium carbonate can also be the product of introducing calcium- and carbonate salts, calcium chloride and sodium carbonate for example, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

A "surface-reacted calcium carbonate" according to the present invention is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source. A $H_3O^+$ ion donor in the context of the present invention is a Bronsted acid and/or an acid salt.

The term "dry" or "dried" material is understood to be a material having between 0.001 to 30 wt.-% of water, based on the total weight of the material weight, for example based on the total weight of the surface-treated surface-reacted calcium carbonate-weight. The % water (equal to "moisture content") is determined according to the Coulometric Karl Fischer measurement method, wherein the filler material is heated to 220 °C, and the water content released as vapour and isolated using a stream of nitrogen gas (at 100 ml/min) is determined in a Coulometric Karl Fischer unit. "Drying" in the sense of the present invention means that heating is carried out until the moisture content of the material, for example the surface-treated surface-reacted calcium carbonate is in the range from 0.001 to 30 % by weight, based on the total weight of the surface-treated surface-reacted calcium carbonate weight.

The "particle size" of particulate materials other than surface-reacted calcium carbonate or surface-treated surface-reacted calcium carbonate herein is described by its distribution of particle sizes $d_x$. Therein, the value $d_x$ represents the diameter relative to which x % by weight of the particles have diameters less than $d_x$. This means that, for example, the $d_{20}$ value is the particle size at which 20 wt.-% of all particles are smaller than that particle size. The $d_{50}$ value is thus the weight median particle size, i.e. 50 wt.-% of all grains are bigger and the remaining 50 wt.-% are smaller than this particle size. For the purpose of the present invention the particle size is specified as weight median particle size $d_{50}$ unless indicated otherwise. The $d_{98}$ value is the particle size at which 98 wt.-% of all particles are smaller than that particle size. Particle sizes were determined by using a Sedigraph™ 5100 or 5120 instrument of Micromeritics Instrument Corporation. The method and the instrument are known to the skilled person and are commonly used to determine the particle size of fillers and pigments. The measurements were carried out in an aqueous solution of 0.1 wt.-% $Na_4P_2O_7$. The samples were dispersed using a high speed stirrer and sonicated.

Volume median grain diameter $d_{50}$ was evaluated using a Malvern Mastersizer 2000 Laser Diffraction System. The $d_{50}$ or $d_{98}$ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

A "specific surface area (SSA)" of the surface-reacted calcium carbonate and surface-treated surface-reacted calcium carbonate in the meaning of the present invention is defined as the surface area of the calcium carbonate divided by its mass. As used herein, the specific surface area is measured by nitrogen gas adsorption using the BET isotherm (ISO 9277:2010) and is specified in $m^2/g$.

The term "surface area" or "outer surface" in the meaning of the present invention refers to the surface of the surface-reacted calcium carbonate particle that is accessible for nitrogen as used for measuring the BET according to ISO 9277:2010. In this regard, it should be noted that the amount of surface-treatment agent according to claim 1 required for full saturation of the surface area is defined as a monolayer concentration. Higher concentrations thus can be chosen by forming bilayered or multi-layered structures on the surface of the surface-reacted calcium carbonate particle.

For the purpose of the present invention the intra-particle specific pore volume is expressed as the volume intruded by mercury under pressure into pores smaller than the inflection point in the discretely bimodal pore size distribution per unit weight of sample. The respective porosity in turn is expressed as the intruded volume per unit volume of the sample. The intrusion porosimetry measurement employs a Micromeritics Autopore V9620 mercury porosimeter having a maximum applied pressure of 414 MPa (60 000 psi), equivalent to a Laplace throat diameter of 0.004 $\mu$m.

For the purpose of the present application, "water-insoluble" materials are defined as materials which, when 100 g of said material is mixed with 100 g deionised water and filtered on a filter having a 0.2 $\mu$m pore size at 20 °C to recover the liquid filtrate, provide less than or equal to 1 g of recovered solid material following evaporation at 95 to 100 °C of 100 g of said liquid filtrate at ambient pressure. "Water-soluble" materials are defined as materials which, when 100 g of said material is mixed with 100 g deionised water and filtered on a filter having a 0.2 $\mu$m pore size at 20 °C to recover the liquid filtrate, provide more than 1 g of recovered solid material following evaporation at 95 to 100 °C of 100 g of said liquid filtrate at ambient pressure.

A "suspension" or "slurry" in the meaning of the present invention comprises insoluble solids and a solvent or liquid, preferably water, and optionally further additives, and usually contains large amounts of solids and, thus, is more viscous and can be of higher density than the liquid from which it is formed.

The term "solid" according to the present invention refers to a material that is solid under standard ambient temperature and pressure (SATP) which refers to a temperature of 298.15 K (25 °C) and an absolute pressure of exactly 100 000 Pa (1 bar, 14.5 psi, 0.98692 atm). The solid may be in the form of a powder, tablet, granules, flakes etc.

An "odorant" according to the present invention is a chemical compound that has a smell or odour, i.e. is sufficiently volatile to be transported to the olfactory system in the upper part of the nose.

For the purpose of the present invention, the term "viscosity" or "Brookfield viscosity" refers to Brookfield viscosity. The Brookfield viscosity is for this purpose measured by a Brookfield DV-III Ultra viscometer at 24 °C ± 3 °C at 100 rpm using an appropriate spindle of the Brookfield RV-spindle set and is specified in mPa·s. Once the spindle has been inserted into the sample, the measurement is started with a constant rotating speed of 100 rpm. The reported Brookfield viscosity values are the values displayed 60 s after the start of the measurement. Based on his technical knowledge, the skilled person will select a spindle from the Brookfield RV-spindle set which is suitable for the viscosity range to be measured. For example, for a viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

Where the term "comprising" is used in the present description and claims, it does not exclude other non-specified elements of major or minor functional importance. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

Figures

Fig.1 refers to the relative amount of diethylamine after the odorant test.
Fig.2 refers to the relative amount of 2-propanethiol after the odorant test.

As set out above, the inventive process for the surface-treatment of a surface-reacted calcium carbonate comprises at least the process steps of (i), (ii), (iii), (iv), (v) and (vi). In the following, it is referred to further details of the present invention and especially the foregoing steps of the inventive process for the surface-treatment of a surface-reacted calcium carbonate.

The process of the present invention may be carried out in form of a continuous process or a batch process, preferably in form of a continuous process.

Characterisation of step (i):provision of a surface-reacted calcium carbonate

According to step (i) of the process of the present invention, a surface-reacted calcium carbonate is provided.

It is appreciated that the surface-reacted calcium carbonate can be one or more surface-reacted calcium carbonate(s).

In one embodiment of the present invention, the surface-reacted calcium carbonate comprises, preferably consists of, one kind of surface-reacted calcium carbonate. Alternatively, the surface-reacted calcium carbonate comprises, preferably consists of, two or more kinds of surface-reacted calcium carbonates. For example, the surface-reacted calcium carbonate comprises, preferably consists of, two or three kinds of surface-reacted calcium carbonates.

Preferably, the surface-reacted calcium carbonate comprises, more preferably consists of, one kind of surface-reacted calcium carbonate.

The surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source.

A $H_3O^+$ ion donor in the context of the present invention is a Brønsted acid and/or an acid salt.

In a preferred embodiment of the invention the surface-reacted calcium carbonate is obtained by a process comprising the steps of: (a) providing a suspension of natural or precipitated calcium carbonate, (b) adding at least one acid having a $pK_a$ value of 0 or less at 20 °C or having a $pK_a$ value from 0 to 2.5 at 20 °C to the suspension of step a), and (c) treating the suspension of step (a) with carbon dioxide before, during or after step (b). According to another embodiment the surface-reacted calcium carbonate is obtained by a process comprising the steps of: (A) providing a natural or precipitated calcium carbonate, (B) providing at least one water-soluble acid, (C) providing gaseous $CO_2$, (D)

contacting said natural or precipitated calcium carbonate of step (A) with the at least one acid of step (B) and with the $CO_2$ of step (C), characterised in that: (i) the at least one acid of step B) has a $pK_a$ of greater than 2.5 and less than or equal to 7 at 20 °C, associated with the ionisation of its first available hydrogen, and a corresponding anion is formed on loss of this first available hydrogen capable of forming a water-soluble calcium salt, and (ii) following contacting the at least one acid with natural or precipitated calcium carbonate, at least one water-soluble salt, which in the case of a hydrogen-containing salt has a $pK_a$ of greater than 7 at 20 °C, associated with the ionisation of the first available hydrogen, and the salt anion of which is capable of forming water-insoluble calcium salts, is additionally provided.

"Natural ground calcium carbonate" (GCC) preferably is selected from calcium carbonate containing minerals selected from the group comprising marble, chalk, dolomite limestone and mixtures thereof. Natural ground calcium carbonate may comprise further naturally occurring components such as magnesium carbonate, alumino silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate containing mineral material comprises a wet ground calcium carbonate containing mineral material, the grinding step may be performed under conditions such that autogenous grinding takes place and/or by horizontal ball milling, and/or other such processes known to the skilled man. The wet processed ground calcium carbonate containing mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

"Precipitated calcium carbonate" (PCC) in the meaning of the present invention is a synthesized material, generally obtained by precipitation following reaction of carbon dioxide and calcium hydroxide in an aqueous environment or by precipitation of calcium and carbonate ions, for example CaCh and $Na_2CO_3$, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

Precipitated calcium carbonate may be ground prior to the treatment with carbon dioxide and at least one $H_3O^+$ ion donor by the same means as used for grinding natural calcium carbonate as described above.

According to one embodiment of the present invention, the natural or precipitated calcium carbonate is in form of particles having a weight median particle size dso of 0.05 to 10.0 $\mu$m, preferably 0.2 to 5.0 $\mu$m, more preferably 0.4 to 3.0 $\mu$m, most preferably 0.6 to 1.2 $\mu$m, especially 0.7 $\mu$m. According to a further embodiment of the present invention, the natural or precipitated calcium carbonate is in form of particles having a top cut particle size $d_{98}$ of 0.15 to 55 $\mu$m, preferably 1 to 40 $\mu$m, more preferably 2 to 25 $\mu$m, most preferably 3 to 15 $\mu$m, especially 4 $\mu$m.

The natural and/or precipitated calcium carbonate may be used dry or suspended in water. Preferably, a corresponding slurry has a content of natural or precipitated calcium carbonate within the range of 1 wt.-% to 90 wt.-%, more preferably 3 wt.-% to 60 wt.-%, even more preferably 5 wt.-% to 40 wt.-%, and most preferably 10 wt.-% to 25 wt.-% based on the weight of the slurry.

The one or more $H_3O^+$ ion donor used for the preparation of surface-reacted calcium carbonate may be any strong acid, medium-strong acid, or weak acid, or mixtures thereof, generating $H_3O^+$ ions under the preparation conditions. According to the present invention, the at least one $H_3O^+$ ion donor can also be an acidic salt, generating $H_3O^+$ ions under the preparation conditions.

According to one embodiment, the at least one $H_3O^+$ ion donor is a strong acid having a $pK_a$ of 0 or less at 20 °C.

According to another embodiment, the at least one $H_3O^+$ ion donor is a medium-strong acid having a $pK_a$ value from 0 to 2.5 at 20 °C. If the $pK_a$ at 20 °C is 0 or less, the acid is preferably selected from sulphuric acid, hydrochloric acid, or mixtures thereof. If the $pK_a$ at 20 °C is from 0 to 2.5, the $H_3O^+$ ion donor is preferably selected from $H_2SO_3$, $H_3PO_4$, oxalic acid, or mixtures thereof. The at least one $H_3O^+$ ion donor can also be an acidic salt, for example, $HSO_4^-$ or $H_2PO_4^-$, being at least partially neutralized by a corresponding cation such as $Li^+$, $Na^+$ or $K^+$, or $HPO_4^{2-}$, being at least partially neutralised by a corresponding cation such as $Li^+$, $Na^+$, $K^+$, $Mg^{2+}$ or $Ca^{2+}$. The at least one $H_3O^+$ ion donor can also be a mixture of one or more acids and one or more acidic salts.

According to still another embodiment, the at least one $H_3O^+$ ion donor is a weak acid having a $pK_a$ value of greater than 2.5 and less than or equal to 7, when measured at 20 °C, associated with the ionisation of the first available hydrogen, and having a corresponding anion, which is capable of forming water-soluble calcium salts. Subsequently, at least one water-soluble salt, which in the case of a hydrogen-containing salt has a $pK_a$ of greater than 7, when measured at 20 °C, associated with the ionisation of the first available hydrogen, and the salt anion of which is capable of forming water-insoluble calcium salts, is additionally provided. According to the preferred embodiment, the weak acid has a $pK_a$ value from greater than 2.5 to 5 at 20 °C, and more preferably the weak acid is selected from the group consisting of acetic acid, formic acid, propanoic acid, and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of drop wise addition, this addition preferably takes place within a time period of 10 min. It is more preferred to add said salt in one step.

According to one embodiment of the present invention, the at least one $H_3O^+$ ion donor is selected from the group consisting of hydrochloric acid, sulphuric acid, sulphurous acid, phosphoric acid, citric acid, oxalic acid, acetic acid, formic acid, and mixtures thereof. Preferably the at least one $H_3O^+$ ion donor is selected from the group consisting of hydrochloric acid, sulphuric acid, sulphurous acid, phosphoric acid, oxalic acid, $H_2PO_4^-$, being at least partially neutralised by a corresponding cation such as $Li^+$, $Na^+$ or $K^+$, $HPO_4^{2-}$, being at least partially neutralised by a corresponding cation such as $Li^+$, $Na^+$, $K^+$, $Mg^{2+}$, or $Ca^{2+}$ and mixtures thereof, more preferably the at least one acid is selected from the group consisting of hydrochloric acid, sulphuric acid, sulphurous acid, phosphoric acid, oxalic acid, or mixtures thereof, and most preferably, the at least one $H_3O^+$ ion donor is phosphoric acid.

The one or more $H_3O^+$ ion donor can be added to the suspension as a concentrated solution or a more diluted solution. Preferably, the molar ratio of the $H_3O^+$ ion donor to the natural or precipitated calcium carbonate is from 0.01 to 4, more preferably from 0.02 to 2, even more preferably 0.05 to 1 and most preferably 0.1 to 0.58.

As an alternative, it is also possible to add the $H_3O^+$ ion donor to the water before the natural or precipitated calcium carbonate is suspended.

In a next step, the natural or precipitated calcium carbonate is treated with carbon dioxide. If a strong acid such as sulphuric acid or hydrochloric acid is used for the $H_3O^+$ ion donor treatment of the natural or precipitated calcium carbonate, the carbon dioxide is automatically formed. Alternatively or additionally, the carbon dioxide can be supplied from an external source.

$H_3O^+$ ion donor treatment and treatment with carbon dioxide can be carried out simultaneously which is the case when a strong or medium-strong acid is used. It is also possible to carry out $H_3O^+$ ion donor treatment first, e.g. with a medium strong acid having a $pK_a$ in the range of 0 to 2.5 at 20 °C, wherein carbon dioxide is formed in situ, and thus, the carbon dioxide treatment will automatically be carried out simultaneously with the $H_3O^+$ ion donor treatment, followed by the additional treatment with carbon dioxide supplied from an external source.

Preferably, the concentration of gaseous carbon dioxide in the suspension is, in terms of volume, such that the ratio (volume of suspension): (volume of gaseous $CO_2$) is from 1:0.05 to 1:20, even more preferably 1:0.05 to 1:5.

In a preferred embodiment, the $H_3O^+$ ion donor treatment step and/or the carbon dioxide treatment step are repeated at least once, more preferably several times. According to one embodiment, the at least one $H_3O^+$ ion donor is added over a time period of at least about 5 min, preferably at least about 10 min, typically from about 10 to about 20 min, more preferably about 30 min, even more preferably about 45 min, and sometimes about 1 h or more.

Subsequent to the $H_3O^+$ ion donor treatment and carbon dioxide treatment, the pH of the aqueous suspension, measured at 20 °C, naturally reaches a value of greater than 6.0, preferably greater than 6.5, more preferably greater than 7.0, even more preferably greater than 7.5, thereby preparing the surface-modified natural or precipitated calcium carbonate as an aqueous suspension having a pH of greater than 6.0, preferably greater than 6.5, more preferably greater than 7.0, even more preferably greater than 7.5.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, the content of these references herewith being included in the present application.

Similarly, surface-reacted precipitated calcium carbonate is obtained. As can be taken in detail from WO 2009/074492 A1, surface-reacted precipitated calcium carbonate is obtained by contacting precipitated calcium carbonate with $H_3O^+$ ions and with anions being solubilised in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilised calcium ions correspond to an excess of solubilised calcium ions relative to the solubilised calcium ions naturally generated on dissolution of precipitated calcium carbonate by $H_3O^+$ ions, where said $H_3O^+$ ions are provided solely in the form of a counterion to the anion, i.e. via the addition of the anion in the form of an acid or non-calcium acid salt, and in absence of any further calcium ion or calcium ion generating source.

Said excess solubilised calcium ions are preferably provided by the addition of a soluble neutral or acid calcium salt, or by the addition of an acid or a neutral or acid non-calcium salt which generates a soluble neutral or acid calcium salt in situ.

Said $H_3O^+$ ions may be provided by the addition of an acid or an acid salt of said anion, or the addition of an acid or an acid salt which simultaneously serves to provide all or part of said excess solubilised calcium ions.

In a further preferred embodiment of the preparation of the surface-reacted natural or precipitated calcium carbonate, the natural or precipitated calcium carbonate is reacted with the one or more $H_3O^+$ ion donors and/or the carbon dioxide in the presence of at least one compound selected from the group consisting of silicate, silica, aluminium hydroxide, earth alkali aluminate such as sodium or potassium aluminate, magnesium oxide, or mixtures thereof. Preferably, the at least one silicate is selected from an aluminium silicate, a calcium silicate, or an earth alkali metal silicate. These components can be added to an aqueous suspension comprising the natural or precipitated calcium carbonate before adding the one or more $H_3O^+$ ion donors and/or carbon dioxide.

Alternatively, the silicate and/or silica and/or aluminium hydroxide and/or earth alkali aluminate and/or magnesium oxide component(s) can be added to the aqueous suspension of natural or precipitated calcium carbonate while the reaction of natural or precipitated calcium carbonate with the one or more $H_3O^+$ ion donors and carbon dioxide has already started. Further details about the preparation of the surface-modified natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present application.

The surface-reacted calcium carbonate can be kept in suspension, optionally further stabilised by a dispersant. Conventional dispersants known to the skilled person can be used. A preferred dispersant is comprised of polyacrylic acids and/or carboxymethylcelluloses.

Alternatively, the aqueous suspension described above can be dried, thereby obtaining the solid (i.e. dry or containing as little water that it is not in a fluid form) surface-reacted natural or precipitated calcium carbonate in the form of granules or a powder.

The surface-reacted calcium carbonate may have different particle shapes, such as e.g. the shape of roses, golf balls and/or brains.

In a preferred embodiment, the surface-reacted calcium carbonate has a specific surface area of from 15 $m^2/g$ to 200 $m^2/g$, preferably from 27 $m^2/g$ to 180 $m^2/g$, more preferably from 25 $m^2/g$ to 160 $m^2/g$, and most preferably from 30 $m^2/g$ to 150 $m^2/g$, measured using nitrogen and the BET method. For example, the surface-reacted calcium carbonate has a specific surface area of from 30 $m^2/g$ to 100 $m^2/g$, measured using nitrogen and the BET method. The BET specific surface area in the meaning of the present invention is defined as the surface area of the particles divided by the mass of the particles. As used therein the specific surface area is measured by adsorption using the BET isotherm (ISO 9277:2010) and is specified in $m^2/g$.

It is furthermore preferred that the surface-reacted calcium carbonate particles have a volume median grain diameter $d_{50}(vol)$ of from 1 to 75 $\mu$m, preferably from 1.3 to 50 $\mu$m, more preferably from 1.5 to 40 $\mu$m, even more preferably from 1.8 to 30 $\mu$m, and most preferably from 2 to 15 $\mu$m.

It may furthermore be preferred that the surface-reacted calcium carbonate particles have a grain diameter $d_{98}(vol)$ of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m.

The value $d_x$ represents the diameter relative to which x % of the particles have diameters less than $d_x$. This means that the $d_{98}$ value is the particle size at which 98 % of all particles are smaller. The $d_{98}$ value is also designated as "top cut". The $d_x$ values may be given in volume or weight percent. The $d_{50}(wt)$ value is thus the weight median particle size, i.e. 50 wt.-% of all grains are smaller than this particle size, and the dso (vol.) value is the volume median particle size, i.e. 50 vol.% of all grains are smaller than this particle size.

Volume median grain diameter $d_{50}$ was evaluated using a Malvern Mastersizer 2000 Laser Diffraction System. The $d_{50}$ or $d_{98}$ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight median grain diameter is determined by the sedimentation method, which is an analysis of sedimentation behaviour in a gravimetric field. The measurement is made with a Sedigraph™ 5100 or 5120, Micromeritics Instrument Corporation. The method and the instrument are known to the skilled person and are commonly used to determine grain size of fillers and pigments. The measurement is carried out in an aqueous solution of 0.1 wt.-% $Na_4P_2O_7$. The samples were dispersed using a high speed stirrer and sonicated.

The processes and instruments are known to the skilled person and are commonly used to determine grain size of fillers and pigments.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m (~ nm). The equilibration time used at each pressure step is 20 s. The sample material is sealed in a 3 cm$^3$ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 $\mu$m down to about 1 - 4 $\mu$m showing the coarse packing of the sample between any agglomerate structures contributing strongly. Below these diameters lies the fine interparticle packing of the particles themselves. If they also have intra-particle pores, then this region appears bi modal, and by taking the specific pore volume intruded by mercury into pores finer than the modal turning point, i.e. finer than the bi-modal point of inflection, the specific intra-particle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the interparticle pore region and the intra-particle pore region, if present. Knowing the intra-particle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Preferably, the surface-reacted calcium carbonate has an intraparticle intruded specific pore volume in the range from 0.1 to 2.3 cm$^3$/g, more preferably from 0.2 to 2.0 cm$^3$/g, especially preferably from 0.4 to 1.8 cm$^3$/g and most preferably from 0.6 to 1.6 cm$^3$/g, calculated from mercury porosimetry measurement.

The intra-particle pore size of the surface-reacted calcium carbonate is preferably in a range of from 0.004 to 1.6 $\mu$m, more preferably in a range of from 0.005 to 1.3 $\mu$m, especially preferably from 0.006 to 1.15 $\mu$m and most preferably of 0.007 to 1.0 $\mu$m, e.g. 0.01 to 0.9 $\mu$m determined by mercury porosimetry measurement.

According to one embodiment of the present invention the surface-reacted calcium carbonate of step (i) has

(a) a specific surface area of from 15 m$^2$/g to 200 m$^2$/g, preferably from 27 m$^2$/g to 180 m$^2$/g, more preferably from 25 m$^2$/g to 160 m$^2$/g, and most preferably from 30 m$^2$/g to 150 m$^2$/g, measured using nitrogen and the BET method according to ISO 9277, and/or
(b) a volume median grain diameter $d_{50}$(vol) of from 1 to 75 $\mu$m, preferably from 1.3 to 50 $\mu$m, more preferably 1.5 to 40 $\mu$m, even more preferably from 1.8 to 30 $\mu$m, and most preferably from 2 to 15 $\mu$m, and/or
(c) a grain diameter $d_{98}$(vol) of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m, and/or
(d) an intraparticle intruded specific pore volume in the range from 0.1 to 2.3 cm$^3$/g, more preferably from 0.2 to 2.0 cm$^3$/g, especially preferably from 0.4 to 1.8 cm$^3$/g and most and preferably from 0.6 to 1.6 cm$^3$/g, calculated from mercury porosimetry measurement.

According to another embodiment of the present invention the surface-reacted calcium carbonate of step (i) has

(a) a specific surface area of from 30 m$^2$/g to 150 m$^2$/g, measured using nitrogen and the BET method according to ISO 9277, and
(b) a volume median grain diameter $d_{50}$(vol) of from 2 to 15 $\mu$m, and optionally
(c) a grain diameter $d_{98}$(vol) of from 10 to 30 $\mu$m, and optionally
(d) an intraparticle intruded specific pore volume in the range from 0.6 to 1.6 cm$^3$/g, calculated from mercury porosimetry measurement.

It is appreciated that the surface-reacted calcium carbonate can be provided in form of an aqueous suspension or in dry form.

If the surface-reacted calcium carbonate is provided in form of an aqueous suspension, the aqueous suspension preferably has a solids content in the range from 1 to 80 wt.-%, based on the total weight of the aqueous suspension. According to a preferred embodiment the solids content of the aqueous suspension is in the range from 3 to 70 wt.-% and even more preferably in the range from 5 to 60 wt.-%, based on the total weight of the aqueous suspension.

The term "aqueous" suspension refers to a system, wherein the liquid phase comprises, preferably consists of, water. However, said term does not exclude that the liquid phase of the aqueous suspension comprises minor amounts of at least one water-miscible organic solvent selected from the group comprising methanol, ethanol, acetone, acetonitrile, tetrahydrofuran and mixtures thereof. If the aqueous suspension comprises at least one water-miscible organic solvent, the liquid phase of the aqueous suspension comprises the at least one water-miscible organic solvent in an amount of from 0.1 to 40.0 wt.-% preferably from 0.1 to 30.0 wt.-%, more preferably from 0.1 to 20.0 wt.-% and most preferably from 0.1 to 10.0 wt.-%, based on the total weight of the liquid phase of the aqueous suspension. For example, the liquid phase of the aqueous suspension consists of water.

According to a preferred embodiment the aqueous suspension consists of water and the surface-reacted calcium carbonate.

Alternatively, the aqueous surface-reacted calcium carbonate suspension comprises further additives.

Additionally or alternatively, the aqueous surface-reacted calcium carbonate suspension comprises a dispersing agent, e.g. a polyacrylate.

Preferably, the surface-reacted calcium carbonate provided in step a) is a dry surface-reacted calcium carbonate. This embodiment is advantageous because the method can be carried out without the implementation of cost-intensive steps required for removing the solvent.

If the surface-reacted calcium carbonate is provided in dry form, the dried surface-reacted calcium carbonate has a content of water between 0.001 to 30 wt.-%, based on the total weight of the surface-treated surface-reacted calcium carbonate-weight. For example, the surface-reacted calcium carbonate provided in step a) has a moisture content of less than 15 wt.-% preferably less than 10.0 wt.-% based on the dry weight of the surface-reacted calcium carbonate provided in step a).

In one embodiment, the surface-reacted calcium carbonate provided in step a) has a moisture content of from 0.01 wt.-% to 10.0 wt.-%, preferably from 0.02 wt.-% to 8.0 wt.-% and more preferably from 0.04 wt.-% to 7 wt.-% based on the dry weight of the surface-reacted calcium carbonate provided in step a). According to a preferred embodiment the dried surface-reacted calcium carbonate is a free flowing powder.

Characterisation of step (ii): provision of a surface-treatment agent

According to step (ii) of the present invention, a surface-treatment agent is provided. More precisely, at least one water soluble metal salt is provided, wherein the water soluble metal salt is selected from the group consisting of a chromium salt, manganese salt, iron salt, cobalt salt, copper salt, zinc salt, silver salt and mixtures thereof.

It is appreciated that the surface-treatment agent can be one or more surface-treatment agent(s).

In one embodiment of the present invention, the surface-treatment agent comprises, preferably consists of, one kind of surface-treatment agent. Alternatively, the surface-treatment agent comprises, preferably consists of, two or more kinds of surface-treatment agents. For example, the surface-treatment agent comprises, preferably consists of, two or three kinds of surface-treatment agents.

Preferably, the surface-treatment agent comprises, more preferably consists of, one kind of surface-treatment agent.

As already set out above the surface-treatment agent is at least one water soluble metal salt, wherein the water soluble metal salt is selected from the group consisting of a chromium salt, manganese salt, iron salt, cobalt salt, copper salt, zinc salt, silver salt and mixtures thereof.

The water soluble metal salt according to the present invention is selected from the group consisting of a chromium salt, manganese salt, iron salt, cobalt salt, copper salt, zinc salt, silver salt and mixtures thereof. The term "water soluble metal salt" according to the present invention is defined as a salt that comprises metal ions and is water soluble.

A chromium salt according to the present invention is a salt that comprises chromium ions, preferably $Cr^{2+}$ and/or $Cr^{3+}$. For example, the chromium salt is selected from chromium bromide ($CrBr_3$), chromium chloride ($CrCl_2$), chromium fluoride ($CrF_2$), chromium nitrate ($Cr(NO_3)_3$) and chromium perchlorate ($Cr(ClO_4)_3$). The at least one water soluble chromium salt can be an anhydrous salt or a hydrate salt.

A manganese salt according to the present invention is a salt that comprises manganese ions, preferably $Mn^{2+}$ and/or $Mn^{3+}$. For example, the manganese salt is selected from manganese bromide ($MnBr_2$), manganese chloride (MnCh), manganese nitrate ($Mn(NO_3)_2$) and manganese sulphate ($MnSO_4$). The at least one water soluble manganese salt can be an anhydrous salt or a hydrate salt.

An iron salt according to the present invention is a salt that comprises iron ions, preferably $Fe^{2+}$ and/or $Fe^{3+}$. For example, the iron salt is selected from iron bromide ($FeBr_2$), iron chloride ($FeCl_2$, $FeCl_3$), iron iodide ($FeI_2$), iron nitrate ($Fe(NO_3)_3$), potassium hexacyanoferrate ($K_4Fe(CN)_6$), ammonium iron sulphate ($(NH_4)_2Fe(SO_4)_2$), and iron sulphate ($FeSO_4$). The at least one water soluble iron salt can be an anhydrous salt or a hydrate salt.

A cobalt salt according to the present invention is a salt that comprises cobalt ions, preferably $Co^{2+}$ and/or $Co^{3+}$. For example, the cobalt salt is selected from cobalt bromide ($CuBr_2$), cobalt chloride ($CoCl_2$), cobalt chlorate

($Co(ClO_3)_2$), cobalt iodide ($CoI_2$), cobalt nitrate ($Co(NO_3)_2$) and cobalt sulphate ($CoSO_4$). The at least one water soluble cobalt salt can be an anhydrous salt or a hydrate salt.

A copper salt according to the present invention is a salt that comprises copper ions, preferably $Cu^+$ and/or $Cu^{2+}$. Preferably, the at least one water soluble copper salt is a water soluble copper(II) salt, i.e. a copper salt, wherein the copper is in oxidation state 2. For example, the copper salt is selected from copper bromide ($CuBr_2$), copper chloride ($CuCl_2$), copper fluoride ($CuF_2$), copper nitrate ($Cu(NO_3)_2$), copper acetate ($C_4H_6CuO_4$) and copper sulphate ($CuSO_4$). The at least one water soluble copper salt can be an anhydrous salt or a hydrate salt.

A zinc salt according to the present invention is a salt that comprises zinc ions, preferably $Zn^{2+}$. For example, the zinc salt is selected from zinc bromide ($ZnBr_2$), zinc chloride (ZnCh), zinc nitrate ($Zn(NO_3)2$), zinc iodide ($ZnI_2$) and zinc citrate (($C_6H_5O_7)_2Zn_3$). The at least one water soluble zinc salt can be an anhydrous salt or a hydrate salt.

A silver salt according to the present invention is a salt that comprises silver ions, preferably $Ag^+$ and/or $Ag^{2+}$. For example, the silver salt is selected from silver

fluoride (AgF), silver perchlorate ($AgClO_4$) and silver nitrate ($AgNO_3$). The at least one water soluble silver salt can be an anhydrous salt or a hydrate salt.

As used herein, a "hydrate" is an inorganic salt containing water molecules combined in a definite ratio as an integral part of the crystal. Depending on the number of water molecules per formula unit of salt, the hydrate may be designated as monohydrate, dihydrate, trihydrate, tetrahydrate, pentahydrate, hexahydrate, heptahydrate, octahydrate, nonahydrate, decahydrate, hemihydrates, etc.

According to one embodiment of the present invention the at least one water soluble metal salt of step (ii) is a water soluble metal salt, preferably selected from the group consisting of a copper salt, zinc salt, silver salt and mixtures thereof, even more preferably is a copper salt selected from the group consisting of copper nitrate, copper sulphate, copper acetate, copper chloride, copper fluoride, copper bromide, hydrates thereof and mixtures thereof, and most preferably is selected from the group consisting of copper sulphate, hydrates thereof and mixtures thereof.

According to another embodiment, the at least one water soluble copper salt is selected from the group consisting of copper nitrate, copper nitrate hexahydrate, copper acetate, copper acetate monohydrate, copper chloride, copper chloride dihydrate, copper fluoride, copper sulphate, copper sulphate pentahydrate, and mixtures thereof. However, the at least one water soluble copper salt can also be selected from any other water soluble copper salt known in the art.

The at least one water soluble metal salt can be provided in form of a solution or as a dry material. According to a preferred embodiment the at least one water soluble metal salt is provided as dry material. The dry material may be in the form of powder, flakes, granules etc. and most preferably is in the form of a powder.

Characterisation of step (iii): provision of an aqueous solvent

According to step (iii) of the present invention, an aqueous solvent is provided.

An "aqueous solvent" according to the present invention is a solution that comprises water and optionally further solvents that are miscible with water, for example, organic solvent like methanol, ethanol, n-butanol, isopropanol, n-propanol, and mixtures thereof. According to a preferred embodiment the solvent consists of water. According to another preferred embodiment the solvent is a mixture of water and at least one organic solvent that is miscible with water. Preferably, the "aqueous solvent" comprises at least 50 vol-% water, more preferably 60 vol-% water, even more preferably 70 vol-% water and most preferably at least 80 vol-% water, based on the total volume of the aqueous solvent.

For example the aqueous solvent is a mixture consisting of water and ethanol wherein the water: ethanol mixture has a ratio of 1:1, based on the volume of the solvents.

According to a preferred embodiment of the present invention the aqueous solvent of step (iii) consists of water.

Characterisation of step (iv): preparation of the metal containing solution

According to step (iv) of the present invention, the at least one water soluble metal salt of step (ii) is contacted with the aqueous solvent of step (iii) to prepare a metal containing solution.

A "metal containing solution" according to the present invention is a solution that comprises water and optionally further solvents that are miscible with water and metal ions. The metal ions are obtained from the at least one water soluble metal salt of step (ii). The "metal containing solution" may comprise one or more source(s) of metal ions, for example two or three source(s) of metal ions.

According to one embodiment of the present invention the metal containing solution consist only of water, metal ions and counterions and does not contain further solvents that are miscible with water. According to another embodiment of the present invention the metal containing solution comprises only metal ions from one source. Preferably the metal containing solution merely consists of water, one kind of metal ions and one kind of counterions.

For example, the metal containing solution comprises water and copper sulphate or the metal containing solution consists of water and copper sulphate.

The contacting of the at least one water soluble metal salt of step (ii) with the aqueous solvent of step (iii) to prepare a metal containing solution can be accomplished by any conventional means known to the skilled person. Preferably, the contacting may be carried out under mixing and/or homogenizing and/or dissolving conditions. The skilled person will adapt these mixing and/or homogenizing and/or dissolving conditions such as the mixing speed, time and temperature according to his process equipment.

For example, the mixing and homogenizing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany or from VISCO JET Rührsysteme GmbH, Germany.

The aqueous solvent of step (iii) may be preheated, before contacting step (iv) is carried out. For example, the aqueous solution of step (iii) may be preheated at a temperature of from 20 to 100 °C, preferably of from 25 to 90 °C, more preferably of from 30 to 60 °C and most preferably of from 35 to 50 °C before contacting step (iv) is carried out. For example, the aqueous solvent of step (iii) may be heated to a temperature of 40 °C $\pm 5$ °C. Alternatively the aqueous solvent of step (iii) may be heated to a temperature of 25 °C $\pm 5$ °C. The heating may be performed at an absolute pressure of exactly 100 000 Pa (1 bar, 14.5 psi, 0.98692 atm). Optionally, the heating is performed at a reduced or increased pressure, i.e. at a pressure below or above 100 000 Pa.

The treatment time for carrying out the preheating of the aqueous solvent of step (iii) is carried out for a period of 120 min or less, preferably for a period of 60 min or less and more preferably for a period of 30 min or less.

The step of contacting the at least one water soluble metal salt of step (ii) with the aqueous solvent of step (iii) may be performed in one or more steps. For example, the process may be a continuous process. In this case, it is possible to add the at least one water soluble metal salt of step (ii) in a constant flow such that a constant concentration of the at least one water soluble metal salt of step (ii) is provided during step (iv). Alternatively, the at least one water soluble metal salt of step (ii) is added to the aqueous solution of step (iii) in one step.

In another embodiment, the inventive process may be a batch process, i.e. the at least one water soluble metal salt of step (ii) is contacted with the aqueous solution obtained of step (iii) in more than one step. Alternatively, it is also possible to add the at least one water soluble metal salt of step (ii) in unequal portions to the aqueous solvent of step (iii), i.e. in larger and smaller portions.

According to one embodiment of the present invention, step c) is carried out in a batch or continuous process for a period of time from 0.1s to 1 000 s. For example, step (iv) is a continuous process and comprises one or several contacting steps and the total contacting time is from 0.1 to 20 s, preferably from 0.5 to 15 s and most preferably from 1 to 10 s.

According to one embodiment of the present invention the metal containing solution obtained in step (iv) has a solids content from 1 to 80 wt.-%, preferably from 5 to 60 wt.-% and most preferably from 10 to 50 wt.-%, based on the total weight of the metal salt solution.

The metal containing solution obtained in step (iv) may be stirred for a period of time from 1 min to 4 h. For example, the metal containing solution obtained in step (iv) may be stirred for a period of time of 10 min, 30 min, 45 min, 1 h, 2 h or 3 h.

The metal containing solution obtained in step (iv) may be filtered. The filtration method may be any method that is known to the skilled person, for example, by a filter paper in a Büchner funnel. The filtration may be performed at an absolute pressure of exactly 100 000 Pa (1 bar, 14.5 psi, 0.98692 atm). Optionally, the heating is performed at a reduced or increased pressure, i.e. at a pressure below or above 100 000 Pa.

Characterisation of step (v): contacting step to obtain a mixture

According to step (v) of the present invention, the at least one surface-reacted calcium carbonate of step (i) is contacted with the metal containing solution of step (iv), in one or several steps, to obtain a mixture. The contacting may be done in one or several steps to form a mixture.

According to one embodiment of the present invention, step (v) comprises the steps of providing the at least one surface-reacted calcium carbonate of step (i) in a first step, and subsequently adding the metal containing solution of step (iv). According to another embodiment of the present invention, step (v) comprises the steps of providing the metal containing solution of step (iv) in a first step, and subsequently adding the at least one surface-reacted calcium carbonate of step (i). According to still another embodiment, the at least one surface-reacted calcium carbonate of step (i) and the metal containing solution of step (iv) are contacted simultaneously. According to a preferred embodiment step (v) comprises the steps of providing the at least one surface-reacted calcium carbonate of step (i) in a first step, and subsequently adding the metal containing solution of step (iv).

It is possible to add the at metal containing solution of step (iv) in a constant flow. Alternatively, the metal containing solution of step (iv) may be added to the at least one surface-reacted calcium carbonate of step (i) in one step. It is also possible to add the metal containing solution of step (iv) to the at least one surface-reacted calcium carbonate of step (i) in more than one step. Alternatively, it is also possible to add the metal containing solution of step (iv) to the at least one surface-reacted calcium carbonate of step (i) in unequal portions to the aqueous solvent of step (iii), i.e. in larger and smaller portions.

The surface-reacted calcium carbonate of step (i) may be provided in dry form, preferably in powder form or may be provided in form of a suspension, preferably in form of an aqueous suspension wherein the solids content of the surface-reacted calcium carbonate is within the range of from 1 to 80 wt.-%, more preferably 3 to 70 wt.-%, and even more preferably 5 to 60 wt.-%, based on the total weight of the aqueous suspension. According to a preferred embodiment the surface-reacted calcium carbonate of step (i) is provided in form of a suspension, preferably in form of an aqueous suspension wherein the solids content of the surface-reacted calcium carbonate is within the range of from 1 to 80 wt.-%, more preferably 3 to 70 wt.-%, and even more preferably 5 to 60 wt.-%, based on the total weight of the aqueous suspension.

According to an exemplified embodiment step (v) comprises the steps of providing the at least one surface-reacted calcium carbonate of step (i) in a first step in form of an aqueous suspension wherein the solids content of the surface-reacted calcium carbonate is within the range of from 1 to 80 wt.-%, based on the total weight of the aqueous suspension, and subsequently adding the metal containing solution of step (iv).

According to another embodiment, step (v) consists of contacting the at least one surface-reacted calcium carbonate of step (i) with the metal containing solution of step (iv), in one or several steps, to obtain a mixture.

The contacting step (v) can be carried out by any means known in the art. For example, the at least one surface-reacted calcium carbonate of step (i) and the metal containing solution of step (iv) can be brought into contact by spraying and/or mixing. Suitable process equipment for spraying or mixing is known to the skilled person.

According to one embodiment of the present invention, process step (v) is carried out by spraying. According to another embodiment of the present invention, process step (v) is carried out by mixing.

The mixing in step (v) can be accomplished by any conventional means known to the skilled person. The skilled person will adapt the mixing conditions such as the mixing speed, dividing, and temperature according to his process equipment. Additionally, the mixing may be carried out under homogenizing and/or particle dividing conditions.

For example, the mixing and homogenizing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany or from VISCO JET Rührsysteme GmbH, Germany.

According to another embodiment of the present invention step (v) is carried out for at least 1 s, preferably for at least 1 min, e.g. for at least 10 min, 15 min, 30 min, 45 min or 60 min. According to a preferred embodiment step d) is carried out for a period of time ranging from 1 s to 60 min, preferably for a period of time ranging from 15 min to 45 min. For example, the mixing step d) is carried out for 30 min ±5 min.

According to a preferred embodiment of the present invention step d) is carried out at a temperature in the range from 30 to 120 °C and/or for a period of time ranging from 1 s to 60 min.

It is also within the confines of the present invention that additional water may be introduced during process step (v), for example, in order to control and/or maintain and/or achieve the desired solids content or Brookfield viscosity of the obtained mixture. According to one embodiment the solids content of the mixture obtained in step (v) is from 0.5 to 80 wt.-%, preferably from 1 to 70 wt.-%, based on the total weight of the mixture. The Brookfield viscosity of the obtained mixture may be from 10 to 10 000 mPa s, preferably from 100 to 2 000 mPa·s.

According to one embodiment of the present invention the at least one metal salt is added to the at least one surface-reacted calcium carbonate in an amount from 0.001 to 80 wt.-%, preferably from 0.01 to 60 wt.-%, more preferably from 0.05 to 50 wt.-%, and most preferably from 1 to 40 wt.-% based on the total dry weight of the at least one surface-reacted calcium carbonate.

According to one embodiment of the present invention before and/or during step (v) a base in form of an aqueous solution or aqueous suspension is added to the at least one surface-reacted calcium carbonate of step (i). The base that is added before and/or during step (v) preferably comprises carbonate ions and may, for example, be selected from sodium carbonate, potassium carbonate, barium carbonate, manganese carbonate and mixtures thereof and most preferably the base is sodium carbonate.

According to a preferred embodiment of the present invention the base is added before step (v) to the surface-reacted calcium carbonate of step (i).

The base may be added in an amount from 0.001 to 80 wt.-%, preferably from 0.01 to 60 wt.-%, more preferably from 0.05 to 50 wt.-%, and most preferably from 1 to 40 wt.-% based on the total dry weight of the at least one surface-reacted calcium carbonate. For example, the base is added in an amount from 10 to 50 wt.-%, based on the total dry weight of the at least one surface-reacted calcium carbonate.

The base may be added in solid form or as "liquid". For example, sodium carbonate, potassium carbonate, barium carbonate, manganese carbonate are solid under standard ambient temperature and pressure (SATP) which refers to a temperature of 298.15 K (25 °C) and an absolute pressure of exactly 100 000 Pa (1 bar, 14.5 psi, 0.98692 atm). If the base is in solid form it can be added before and/or during step (v) for example as powder, tablet, granules, flakes etc.

However, the solid base may also be dispersed/suspended in water and added as dispersion/suspension before and/or during step (v), i.e. in a liquid form.

Characterisation of step (vi): heating of the mixture

According to step (vi) of the present invention, the mixture obtained from step (v) is heated to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate.

In step (vi) of the process of the present invention, the mixture of step (v) is heated to a temperature in the range from 50 to 180 °C to form a surface-treated surface-reacted calcium carbonate. According to one embodiment, in step (vi) the mixture obtained from step (v) is heated to a temperature in the range from 60 to 160 °C, even more preferably from 80 to 150 °C and most preferably from 90 to 130 °C.

The temperature of steps (v) and step (vi) may be the same or different. According to a preferred embodiment, the temperature of steps (v) and step (vi) is the same. In the gist of the present invention heating means keeping the mixture obtained from step (v) at a temperature in the range from 50 to 180 °C, or one of the preferred temperature ranges, for a finite period of time. The term "heating" is not limiting the process according to the present invention to a process, wherein the temperature of the mixture is adjusted to the temperature range of 50 to 180 °C by addition of energy through an external heat source during step (vi), but also comprises keeping a preheated mixture, which is obtained by e.g. providing a preheated at least one surface-reacted calcium carbonate of step (i) and/or a preheated metal containing solution of step (iv), or preheating the mixture during step (v). For the sake of completeness, it should be mentioned here that in case the temperature of the mixture obtained from step (v) is higher than 250 °C, adjusting the temperature to a range from 50 to 180 °C is also covered by the term heating. According to one embodiment of the present invention, in step (v) of the process of the present invention, the mixture of step (v) is adjusted to a temperature in the range from 20 to 250 °C to form a surface-treated surface-reacted calcium carbonate.

In case the process of the present invention is carried out in form of a continuous process, the heating step may be carried out for 3 s to 60 s, and preferably for 10 s to 30 s. In case that the process of the present invention is carried out in form of a batch process, the heating step may be carried out for 1 to 60 min, preferably 3 to 40 min, and more preferably from 5 to 30 min. Alternatively the heating step may be carried out longer time period than 60 min, for example for 2 h or for 3 h or for 4 h. The heating step need not to be longer than 5 h.

The skilled person will appreciate that step (vi) is carried out for a time period sufficient to form a surface-treated surface-reacted calcium carbonate. According to one embodiment of the present invention, process step (vi) is carried out for at least 1 min, preferably for at least 5 min. According to one embodiment, process step (vi) is carried out by heating the mixture to a temperature in the range from 50 to 180 °C for at least 10 min, preferably at least 20 min, more preferably at least 1 h, even more preferably for at least 2 h, and most preferably for at least 3 h.

According to one embodiment, the heating step (vi) is carried out until 10 to 99.8 mol-%, preferably 20 to 95 mol-% of the at least one water soluble metal salt, wherein the water soluble metal salt is selected from the group consisting of a chromium salt, manganese salt, iron salt, cobalt salt, copper salt, zinc salt, silver salt and mixtures thereof, provided in step (ii) is precipitated in form of an water insoluble metal compound on at least a part of the surface of the at least one surface-reacted calcium carbonate to form a surface-treated surface-reacted calcium carbonate. It is believed that the precipitation of the insoluble metal compound follows the Arrhenius equation, which means that increasing of the temperature allows to shorten the reaction time and decreasing the temperatures leads to a prolonged reaction time.

The heating step (vi) can be carried out at reduced pressure, ambient pressure or under increased pressure. For temperatures above 100 °C it is preferred to carry out the heating step under increased pressure.

It is also within the confines of the present invention that process step (v) and process step (vi) can be carried out simultaneously. Thus, the step of contacting of the at least one surface-reacted calcium carbonate of step (i), with the metal containing solution of step (iv), and the step of heating the mixture to a temperature in the range from 50 to 180 °C may be carried out simultaneously.

By means of step (vi), a surface-treated surface-reacted calcium carbonate is obtained. According to one embodiment the surface-treated surface-reacted calcium carbonate is obtained in form of an aqueous suspension. The aqueous suspension may have a solid content in the range from 0.8 to 80 wt.-%, more preferably in the range from 1 to 50 wt.-%, based on the weight of the surface-treated surface-reacted calcium carbonate in the suspension. If necessary, additional water may be introduced during process step (vi), for example, in order to control and/or maintain and/or achieve the desired solids content or Brookfield viscosity of the obtained aqueous suspension.

The inventors surprisingly found out that by the foregoing process it is possible to prepare surface-treated surface-reacted calcium carbonate having improved characteristics. More precisely, by using the inventive process, it is possible to prepare surface-treated surface-reacted calcium carbonate that comprises at least one water insoluble metal compound formed from the metal provided as metal salt, metal hydroxide, metal oxide or mixtures thereof in step (ii) on the surface of the surface-reacted calcium carbonate. Therefore, the reaction products obtained from the surface-treatment agent, namely the at least one water soluble metal salt, water soluble metal hydroxide, water soluble metal oxide or mixtures thereof with the surface-reacted calcium carbonate are attached stronger to the surface of the surface-reacted calcium carbonate than compared to conventional particulate materials wherein the reaction products of the surface-treatment agent with the surface-reacted calcium carbonate are merely absorbed into the pores, or are coated or adsorbed onto the internal or external surface of the particulate material.

Due to this immobilization and/or stronger attachment the at least one water insoluble metal compound formed cannot be washed off from the surface of the surface-reacted calcium carbonate with water.

The at least one water insoluble metal compound formed from the metal provided as metal salt in step (ii) on the surface of the surface-reacted calcium carbonate may be detected or analysed by any method known to the skilled person. For example, the at least one water insoluble metal compound formed on the surface of the surface-reacted calcium carbonate may be detected by XRD, for example with a Bruker Advance D8 powder diffractometer.

According to one embodiment of the present invention the at least one water soluble metal salt of step (ii) is copper sulphate, hydrates thereof or mixtures thereof and/or the at least one water insoluble metal compound formed on the surface of the surface-reacted calcium carbonate is selected from the group consisting of copper hydrogen phosphate hydrate ($CuHPO_4.H_2O$), malachite ($Cu_2CO_3(OH)_2$), brochantite ($Cu_4SO_4(OH)_6$), deviline ($CaCu_4(SO_4)_2(OH)_6 \cdot 3H_2O$), posnjakite ($Cu_4(SO_4)(OH)_6 \cdot H_2O$) and mixtures thereof.

Alternatively, the at least one water soluble metal salt of step (ii) is zinc sulphate, hydrates thereof or mixtures thereof and/or the at least one water insoluble metal compound formed on the surface of the surface-reacted calcium carbonate is zinc hydrogen phosphate ($ZnH_2P_2O_7$).

Alternatively, the at least one water soluble metal salt of step (ii) is zinc chloride, hydrates thereof or mixtures thereof and/or the at least one water insoluble metal compound formed on the surface of the surface-reacted calcium carbonate is zinc phosphate hydrate ($Zn_3(PO_4)_2 \cdot H_2O$).

According to another embodiment of the present invention the at least one water soluble metal salt of step (ii) is zinc sulphate and/or zinc chloride, hydrates thereof or mixtures thereof.

According to another embodiment of the present invention the at least one water insoluble metal compound formed on the surface of the surface-reacted calcium carbonate is selected from the group consisting of chromium phosphate ($CrPO_4$), chromium carbonate ($Cr_2(CO_3)$), manganese phosphate ($Mn_3(PO_4)_2$), manganese carbonate ($MnCO_3$), iron (III) phosphate ($FePO_4$), iron (II) phosphate ($Fe_3(PO_4)_2$, iron hydrogen phosphate hydrate ($Fe_3H_9(PO_4)_6 \cdot 6H_2O$, siderite ($FeCO_3$), cobalt phosphate ($Co_3(PO_4)_2$), cobalt hydrogen phosphate ($Co_2(HPO_4)_3$, cobalt carbonate

($CoCO_3$), silver phosphate ($Ag_3PO_4$), silver hydrogen phosphate ($Ag_2HPO_4$), silver carbonate ($Ag_2CO_3$) and mixtures thereof.

Additional process steps

According to one embodiment, the process of the present invention further comprises a step of grinding and/or fractionating and/or classifying the mixture obtained from step (v) before, during or after step (vi). According to another embodiment, the process further comprises a step of filtrating the mixture obtained from step (v) before step (vi). According to still another embodiment, the process further comprises the steps of grinding and/or fractionating and/or classifying the mixture obtained from step (v), and subsequently, filtrating the obtained ground mixture before step (vi).

The grinding step may be undertaken by all the techniques and grinders well known to the man skilled in the art for wet grinding. The grinding step may be carried out with a conventional grinding device, for example, under conditions such that refinement predominantly results from impacts with a secondary body, i.e. in one or more of: a ball mill, a rod mill, a vibrating mill, a centrifugal impact mill, a vertical bead mill, an attrition mill, or other such equipment known to the skilled person. The grinding step may be carried out in batch or continuously, preferably continuously. Preferably the grinding step may be carried out without adding compounds different from the compounds as provided in steps (i) and (ii).

The mixture obtained from step (v) may be filtrated in order to remove salts or water.

The obtained surface-treated surface-reacted calcium carbonate may be further processed, e.g., in case the surface-treated surface-reacted calcium carbonate is obtained in form of a suspension, the surface-treated surface-reacted calcium

carbonate may be separated from the aqueous suspension and/or subjected to a washing step and/or a surface treatment step and/or a drying step.

According to one embodiment of the present invention, the mixture formed in step (v) of the inventive process is an aqueous suspension and the process further comprises a step (vii) of separating the surface-treated surface-reacted calcium carbonate from the aqueous suspension after step (vi). Thus, a process for manufacturing a modified mineral-based filler may comprise the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal in step (ii) on the surface of the surface-reacted calcium carbonate, and

(vii) separating the surface-treated surface-reacted calcium carbonate from the aqueous suspension obtained from step (vi).

The surface-treated surface-reacted calcium carbonate from step (vi) may be separated from the aqueous suspension by any conventional means of separation known to the skilled person.

According to one embodiment of the present invention, the process according to the present invention further comprises a step (x) of mechanically dewatering, preferably by centrifugation or filtration, the mixture obtained from step (v) before heating step (vi). Examples of mechanical dewatering processes are filtration, e.g. by means of a drum filter or filter press, nanofiltration, or centrifugation. Alternatively, dewatering may be performed thermally. An example for a thermal dewatering process is a concentrating process by the application of heat, for example, in an evaporator.

According to a preferred embodiment, the mechanically dewatering, is done by filtration and/or centrifugation.

According to one embodiment of the present invention, the process further comprises a step (viii) of washing the surface-treated surface-reacted calcium carbonate obtained from step (vi) or step (vii), if present, with water. The surface-treated surface-reacted calcium carbonate may be washed with water and/or a suitable solvent, preferably water. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water. For example, the surface-treated surface-reacted calcium carbonate can be washed one time, two times or three times with water and/or a suitable solvent, preferably water.

After separation, the surface-treated surface-reacted calcium carbonate can be dried in order to obtain a dried surface-treated surface-reacted calcium carbonate.

According to one embodiment the process of the present invention further comprises a step (ix) of drying the surface-treated surface-reacted calcium carbonate after step (vi) or step (vii) or step (viii), if present, at a temperature in the range from 60 to 600 °C, preferably in the range of from 80 to 550 °C. Preferably, the drying is performed until the moisture content of the surface-treated surface-reacted calcium carbonate is between 0.01 and 5 wt.-%, based on the total weight of the dried modified mineral-based filler.

In general, the drying step (ix) may take place using any suitable drying equipment and can, for example, include thermal drying and/or drying at reduced pressure using equipment such as an evaporator, a flash drier, an oven, a spray drier and/or drying in a vacuum chamber. The drying step (ix) can be carried out at reduced pressure, ambient pressure or under increased pressure. For temperatures below 100 °C it may be preferred to carry out the drying step under reduced pressure.

According to one preferred embodiment, the separation is carried out by a thermal method. This may allow to dry the modified mineral-based filler subsequently without changing the equipment.

According to one embodiment of the present invention the surface-reacted calcium carbonate of step (i) is heated to a temperature in the range from 20 to 200 °C, preferably from 30 to 160 °C, even more preferably from 50 to 150 °C and most preferably from 80 to 130 °C prior or during to the contacting step (v).

Additional surface treatment

The surface-treated surface-reacted calcium carbonate formed in step (vi) of the inventive process can be post-treated, preferably after steps (vii), (viii), (ix) or (x), if present. However, it may also be possible to carry out the additional surface treatment on a wet product. According to one embodiment the surface-treated surface-reacted calcium carbonate is treated with a fatty acid, e.g. stearic acid, a silane, or phosphoric esters of fatty acids, or a siloxane.

According to one embodiment the process of the present invention further comprises a step of treating the surface-treated surface-reacted calcium carbonate formed in step (vi) during and/or after step (vi) in one or more steps with at least one hydrophobising agent, preferably at a temperature from 30 to 200 °C. Preferably, the additional surface treatment is carried out on the dried surface-treated surface-reacted calcium carbonate. Thus, according to one embodiment of the present invention, the inventive process comprises a step (ix) of drying the surface-treated surface-reacted calcium carbonate, and the dried surface-treated surface-reacted calcium carbonate is treated after drying step (ix) in one or more steps with at least one hydrophobising agent, preferably at a temperature from 30 to 200 °C. According to one embodiment the surface-treated surface-reacted calcium carbonate formed in step (vi) is treated during and/or after step (vi) in one or more steps with at least one hydrophobising agent at a temperature from 30 to 200 °C, preferably from 60 to 130 °C, more preferably from 70 to 120 °C, and most preferably from 80 to 110 °C.

According to one embodiment the at least one hydrophobising agent is added in an amount such that the total weight of the at least one hydrophobising agent on the total surface area of the surface-treated surface-reacted calcium carbonate is from 0.001 to 10 mg/m$^2$, preferably from 0.001 to 9 mg/m$^2$, more preferably from 0.01 to 8 mg/m$^2$, and most preferably from 0.1 to 4 mg/m$^2$.

According to one embodiment of the present invention, the process further comprises a step of treating the surface-treated surface-reacted calcium carbonate formed in step (vi) during and/or after step (vi) in one or more steps with at least one hydrophobising agent at a temperature from 30 to 200 °C, wherein the hydrophobising agent is added in an amount such that the total weight of the at least one hydrophobising agent on the total surface area of the surface-treated surface-reacted calcium carbonate is from 0.001 to 10 mg/m$^2$.

Suitable hydrophobising agents are, for example, fatty acids, aliphatic carboxylic acids, aliphatic carboxylic esters, mono-substituted succinic anhydrides, mono-substituted succinic acids, or phosphoric acid esters. Suitable hydrophobising agents and methods for preparing surface-treated filler products thereof are, for example, described in EP 2 159 258 A1, EP 2 390 285 A1, EP 2 390 280 A1, WO 2014/060286 A1 and WO 2014/128087 A1.

In one embodiment, the hydrophobising agent is an aliphatic carboxylic acid having a total amount of carbon atoms from $C_4$ to $C_{24}$ and/or reaction products thereof. The term "reaction products" of the aliphatic carboxylic acid in the meaning of the present invention refers to products obtained by contacting the modified mineral-based filler with the at least one aliphatic carboxylic acid. Said reaction products are formed between at least a part of the at least one aliphatic carboxylic acid and reactive molecules located at the surface of the surface-treated surface-reacted calcium carbonate particles.

The aliphatic carboxylic acid in the meaning of the present invention may be selected from one or more straight chain, branched chain, saturated, unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

In one embodiment of the present invention, the aliphatic carboxylic acid is selected from saturated unbranched carboxylic acids, that is to say the aliphatic carboxylic acid is preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid and mixtures thereof.

In another embodiment of the present invention, the aliphatic carboxylic acid is selected from the group consisting of octanoic acid, decanoic acid, lauric acid, myristic acid, palmitic acid, stearic acid, arachidic acid and mixtures thereof. Preferably, the aliphatic carboxylic acid is selected from the group consisting of myristic acid, palmitic acid, stearic acid and mixtures thereof. For example, the aliphatic carboxylic acid is stearic acid.

Additionally or alternatively, the hydrophobising agent can be at least one mono-substituted succinic acid and/or salty reaction product(s) and/or at least one phosphoric acid ester blend of one or more phosphoric acid mono-ester and/or reaction products thereof and one or more phosphoric acid di-ester and/or reaction products thereof. Methods for treating a calcium carbonate-comprising material with these hydrophobising agents are described, for example, in EP 2 722 368 A1 and EP 2 770 017 A1.

According to one embodiment, the at least one hydrophobising agent is selected from the group consisting of an aliphatic carboxylic acid having a total amount of carbon atoms from $C_4$ to $C_{24}$ and/or reaction products thereof, a mono-substituted succinic anhydride consisting of succinic anhydride mono-substituted with a group selected from a linear, branched, aliphatic and cyclic group having a total amount of carbon atoms from at least $C_2$ to $C_{30}$ in the substituent and/or reaction products thereof, a phosphoric acid ester blend of one or more phosphoric acid mono-ester and/or reaction products thereof and one or more phosphoric acid di-ester and/or reaction products thereof, polyhydrogensiloxane and reaction products thereof, an inert silicone oil, preferably polydimethylsiloxane, and mixtures thereof.

The term "succinic anhydride", also called dihydro-2,5-furandione, succinic acid anhydride or succinyl oxide, has the molecular formula $C_4H_4O_3$ and is the acid anhydride of succinic acid. The term "mono-substituted succinic anhydride" in the meaning of the present invention refers to a succinic anhydride wherein a hydrogen atom is substituted by another substituent.

The term "reaction products of at least one mono-substituted succinic anhydride" in the meaning of the present invention refers to products obtained by contacting a surface-treated surface-reacted calcium carbonate with one or more mono-substituted succinic anhydride(s). Said salty reaction products are formed between the mono-substituted succinic acid which is formed from the applied mono-substituted succinic anhydride and reactive molecules located at the surface of the surface-treated surface-reacted calcium carbonate.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from $C_6$ to $C_{30}$, preferably from $C_8$ to $C_{22}$, more preferably from $C_8$ to $C_{20}$, and most preferably from $C_8$ to $C_{18}$ in the alcohol substituent. The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from $C_6$ to $C_{30}$, preferably from $C_8$ to $C_{22}$, more preferably from $C_8$ to $C_{20}$, and most preferably from $C_8$ to $C_{18}$ in the alcohol substituent.

The term "salty reaction products of a phosphoric acid ester or blend of one or more phosphoric acid mono-esters and/or one or more phosphoric acid di-esters" in the meaning of the present invention refers to products obtained by contacting an alkaline earth metal carbonate-comprising material with one or more phosphoric acid mono-ester and one or more phosphoric acid di-ester and optionally phosphoric acid. Said salty reaction products are formed between the applied one or more phosphoric acid mono-ester and one or more phosphoric acid di-ester and optionally phosphoric acid and reactive molecules located at the surface of the surface-treated surface-reacted calcium carbonate.


The surface-treated surface-reacted calcium carbonate

According to the present invention a surface-treated surface-reacted calcium carbonate obtainable by the process according to the present invention is provided.

According to another embodiment of the present invention a surface-treated surface-reacted calcium carbonate is provided obtainable by the process comprising the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate.

For, example, by using the inventive process, it is possible to prepare surface-treated surface-reacted calcium carbonate having improved characteristics. More precisely, by using the inventive process, it is possible to prepare surface-treated surface-reacted calcium carbonate containing at least one water insoluble metal compound formed from a metal provided as metal salt immobilized on the surface of the surface-reacted calcium carbonate, wherein the metal salt is a water soluble metal salt selected from the group consisting of a chromium salt, manganese salt, iron salt, cobalt salt, copper salt, zinc salt, silver salt and mixtures thereof. Therefore, the surface-treatment agent, namely the at least one water soluble metal salt is attached stronger to the surface of the surface-reacted calcium carbonate than compared to conventional particulate materials wherein the surface-treatment agent is merely absorbed or coated onto the surface of the particulate material.

Due to this stronger attachment the at least one water insoluble metal compound formed cannot be washed off from the surface of the surface-reacted calcium carbonate with water. This can, for example, be analysed be washing the surface-treated surface-reacted calcium carbonate and analysing the washing water with ICP-OES. Such a procedure is known to the skilled person and described in the example section.

The surface-treated surface-reacted calcium carbonate of the present invention can be provided in form of a suspension of surface-treated surface-reacted calcium carbonate, as a separated surface-treated surface-reacted calcium carbonate or as a dried surface-treated surface-reacted calcium carbonate. According to a preferred embodiment the surface-treated surface-reacted calcium carbonate is a dried surface-treated surface-reacted calcium carbonate, preferably in the form of a powder.

In case the surface-treated surface-reacted calcium carbonate has been dried, the moisture content of the dried surface-treated surface-reacted calcium carbonate can be between 0.01 and 30 wt.-%, based on the total weight of the dried surface-treated surface-reacted calcium carbonate. For example, the moisture content of the dried surface-treated surface-reacted calcium carbonate is less than or equal to 20.0 wt.-%, preferably less than 10.0 wt.-%, even more preferably less than 5.0 wt.-%, based on the total weight of the dried surface-treated surface-reacted calcium carbonate, According to one embodiment, the moisture content of the dried surface-treated surface-reacted calcium carbonate is less than or equal to 1.0 wt.-%, based on the total weight of the dried surface-treated surface-reacted calcium carbonate, preferably less than or equal to 0.5 wt.-%, and more preferably less than or equal to 0.2 wt.-%. According to another embodiment, the moisture content of the dried surface-treated surface-reacted calcium carbonate is between 0.01 and 0.15 wt.-%, preferably between 0.02 and 0.10 wt.-%, and more preferably between 0.03 and 0.07 wt.-%, based on the total weight of the dried surface-treated surface-reacted calcium carbonate.

The surface-treated surface-reacted calcium carbonate according to the present invention may have

(a) a specific surface area of from 15 $m^2$/g to 200 $m^2$/g, preferably from 27 $m^2$/g to 180 $m^2$/g, more preferably from 25 $m^2$/g to 160 $m^2$/g, and most preferably from 30 $m^2$/g to 150 $m^2$/g, measured using nitrogen and the BET method according to ISO 9277, and/or

(b) a volume median grain diameter $d_{50}$(vol) of from 1 to 75 $\mu$m, preferably from 1.3 to 50 $\mu$m, more preferably from 1.5 to 40 $\mu$m, even more preferably from 1.8 to 30 $\mu$m, and most preferably from 2 to 15 $\mu$m, and/or

(c) a grain diameter $d_{98}$(vol) of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m, and/or

(d) an intra-particle intruded specific pore volume in the range from 0.1 to 2.3 $cm^3$/g, more preferably from 0.2 to 2.0 $cm^3$/g, especially preferably from 0.4 to 1.8 $cm^3$/g and most and preferably from 0.6 to 1.6 $cm^3$/g, calculated from mercury porosimetry measurement.

The surface-treated surface-reacted calcium carbonate according to the present invention may have

(a) a specific surface area of from 30 $m^2$/g to 150 $m^2$/g, measured using nitrogen and the BET method according to ISO 9277, and

(b) a volume median grain diameter $d_{50}$(vol) of from 2 to 15 $\mu$m, and optionally

(c) a grain diameter $d_{98}$(vol) of from 10 to 30 $\mu$m, and optionally

(d) an intra-particle intruded specific pore volume in the range from 0.6 to 1.6 $cm^3$/g, calculated from mercury porosimetry measurement.

According to one embodiment of the present invention the surface-treated surface-reacted calcium carbonate comprises at least one compound selected from the group consisting of copper hydrogen phosphate hydrate ($CuHPO_4 \cdot H_2O$), malachite ($Cu_2CO_3(OH)_2$), brochantite ($Cu_4SO_4(OH)_6$), deviline ($CaCu_4(SO_4)_2(OH)_6 \cdot 3H_2O$), posnjakite ($Cu_4(SO_4)(OH)_6 \cdot H_2O$) and mixtures thereof as water insoluble metal compound formed on the surface of the surface-reacted calcium carbonate.

According to one embodiment of the present invention the surface-treated surface-reacted calcium carbonate comprises insoluble zinc salts on the surface of the surface-reacted calcium carbonate.

The inventive surface-treated surface-reacted calcium carbonate may also be provided and/or used in form of a composition. According to one aspect of the present invention, a composition is provided comprising a surface-treated surface-reacted calcium carbonate according to present invention. The composition may comprise the surface-treated surface-reacted calcium carbonate according to present invention in an amount of at least 0.5 wt.-%, based on the total weight of the composition, preferably at least 2 wt.-%, more preferably at least 5 wt.-%, even more preferably at least 10 wt.-%, and most preferably at least 20 wt.-%.

Use of at least one surface-reacted calcium carbonate for immobilization

According to the present invention at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source, is used for immobilizing at least one water soluble metal salt on the surface of the at least one surface-reacted calcium carbonate by preparing at least one surface-treated surface-reacted calcium carbonate in accordance with the process of the present invention.

According to one embodiment of the present invention at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source, is used for immobilizing at least one water soluble metal salt on the surface of the at least one surface-reacted calcium carbonate by preparing at least one surface-treated surface-reacted calcium carbonate in accordance with the process comprising the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt, water soluble metal hydroxide, water soluble metal oxide or mixtures thereof of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate.

The term "immobilizing" according to the present invention means that the at least one water soluble water soluble metal salt is capable of forming a water insoluble salt in the presence of at least one surface-reacted calcium carbonate on the surface thereof. Therefore, it is possible to attach the at least one water soluble metal salt, wherein the water soluble metal salt is selected from the group consisting of a chromium salt, manganese salt, iron salt, cobalt salt, copper salt, zinc salt, silver salt and mixtures thereof, stronger to the surface of the particulate material compared to conventional particulate materials wherein the reaction products of the surface-treatment agent with the surface-reacted calcium carbonate are merely absorbed into the pores, or are coated or adsorbed onto the internal or external surface of the particulate material.

Use of the surface-treated surface-reacted calcium carbonate

The inventors of the present invention found that the surface-treated surface-reacted calcium carbonate may exhibit antimicrobial activity in dry products or wet products, preferably dry products. Therefore, the inventive surface-treated surface-reacted calcium carbonate can be used in suspensions, dispersions or slurries of minerals, fillers or pigments, which are typically employed in the paper, paint, rubber and plastics industries as coatings, fillers, extenders and pigments for papermaking as well as aqueous lacquers and paints intended for the preparation of dry or wet products, wherein the dry products are preferred. The inventive surface-treated surface-reacted calcium carbonate may also substitute conventional fillers completely or partially. Since the surface-treatment agent is immobilized on the surface of the surface-reacted calcium carbonate and, therefore attached stronger to the surface of the surface-treated surface-reacted calcium carbonate, a long lasting antimicrobial effect can be provided by the inventive surface-treated surface-reacted calcium carbonate even if it comes in contact with water, for example, when used during manufacturing the products in form of an aqueous suspension. Furthermore, the inventive surface-treated surface-reacted calcium carbonate can even be used in articles, which involve contact with water or aqueous liquids or are subjected regularly to water washing, such as paints or cloths.

The surface-treated surface-reacted calcium carbonate may be used for various applications.

According to one embodiment, the surface-treated surface-reacted calcium carbonate obtainable by a process according to the present invention or a composition comprising the same is used in polymer applications, paper coating applications, paper making, paints, coatings, sealants, printing inks, adhesives, food, feed, pharmaceuticals, concrete, cement, cosmetics, water treatment, engineered wood applications, plasterboard applications, packaging applications and/or agricultural applications. Engineered wood applications may comprise the use in engineered wood products such as wood composites materials, preferably medium density fibreboards or chipboards.

According to another embodiment, the surface-treated surface-reacted calcium carbonate obtainable by a process according to the present invention or a composition comprising the same is used as preservative, for the control of odour, and/or for enhancing and/or mediating antimicrobial activity of a substrate. Preferably the modified-based filler may be used as a dried surface-treated surface-reacted calcium carbonate.

A preservative is a compound which can protect a substrate, dry and/or wet, from spoilage and/or degradation and/or destruction, and/or defacement and/or visible disfigurement due to the action of microorganisms and/or prevent growth of microorganisms on a substrate and/or in a substrate and/or prevent contamination of a substrate by microorganisms and/or prevent settlement of microorganisms on a substrate. According to a preferred embodiment, the preservative acts as a dry-film-preservative. The substrate is preferably in a solid state, such as a paper surface, a wood surface, a wall, the surface of a packaging material or the surface of a polymer article, but can also be in a wet state such as in an aqueous suspension.

"Odor" according to the present invention generally is defined as one or more volatilized chemical compounds, generally at a very low concentration, that humans or other animals perceive by the sense of olfaction. Accordingly, an "odorant" is a chemical compound that has a smell or odour, i.e. is sufficiently volatile to be transported to the olfactory system in the upper part of the nose.

Preferred odours to be controlled according to the present invention are odours which cause an unpleasant sensation, i.e. malodours, but are not limited thereto. Such odours may originate from odorants, which are preferably selected from the group comprising odorants contained in human and animal body liquids and secretion such as menses, blood, plasma, sanies; vaginal secretions, mucus, milk, urine; faeces; vomit and perspiration; odorants originating from putrefaction such as of human or animal tissue; food such as dairy products, meat and fish and fruit such as durian fruit.

According to one preferred embodiment of the present invention the odorants are selected from the group consisting of amines such as triethylamine, diethylamine, trimethylamine, diaminobutane, tetramethylenediamine, pentamethylenediamine, pyridine, indole, 3-methylindole; carboxylic acids such as propionic acid, butanoic acid, 3-methylbutanoic acid, 2-methylpropanoic acid, hexanoic acid; sulphur organic compounds such as thiols, e.g. methanethiol, phosphor organic compounds such as methylphosphine, dimethylphosphine, their derivatives and mixtures thereof; preferably the odorants are amines and most preferably the odorant is diethylamine. According to an exemplified embodiment of the present invention the odorants are diethylamine or a thiol, for example 2-propanethiol.

The surface-treated surface-reacted calcium carbonate can also be used for enhancing and/or mediating the antimicrobial activity of a substrate, e.g. a sheet of paper, a cardboard, a polymer material, a paint, a wood surface, concrete, or a plant. According to a preferred embodiment, the antimicrobial activity is against at least one strain of bacteria and/or at least one strain of mould and/or at least one strain of yeast and/or at least one algae. Antimicrobial activity of a compound refers to a reduction of growth of microorganism and/or a reduction of viable microorganisms apparent in the presence of said compound. The expression "enhancing the antimicrobial activity" means that the antimicrobial activity of the substrate containing the surface-treated surface-reacted calcium carbonate is higher than the antimicrobial activity compared to a substrate not containing said filler. The expression "for mediating the antimicrobial activity of a substrate" means that no antimicrobial activity is apparent in a substrate without the inventive surface-treated surface-reacted calcium carbonate.

According to one embodiment, the substrate is a paper, a cardboard, a polymer material, a paint, a wood surface, concrete, or a plant. According to one embodiment, the polymer material is a polymer film. A "film" in the meaning of the present invention is a sheet or layer of material having a median thickness which is small compared to its length and width. For example, the term "film" may refer to a sheet or layer of material having a median thickness of less than 200 $\mu$m, but more than 1 $\mu$m.

According to one embodiment the at least one strain of bacteria is selected from the group consisting of Escherichia sp., Staphylococcus sp., Thermus sp., Propionibacterium sp., Rhodococcus sp., Panninobacter sp., Caulobacter sp., Brevundimonas sp., Asticcacaulis sp., Sphingomonas sp., Rhizobium sp., Ensifer sp., Bradyrhizobium sp., Tepidimonas sp., Tepidicella sp., Aquabacterium sp., Pelomonas sp., Alcaligenis sp., Achromobacter sp., Ralstonia sp., Limnobacter sp., Massilia sp., Hydrogenophaga sp., Acidovorax sp., Curvibacter sp., Delftia sp., Rhodoferax sp., Alishewanella sp., Stenotrophomonas sp., Dokdonella sp., Methylosinus sp., Hyphomicrobium sp., Methylosulfomonas sp., Methylobacteria sp., Pseudomonas sp. such as Pseudomonas mendocina, Enterococcus sp., Myroides sp., Burkholderia sp., Alcaligenes sp. Staphylococcus sp. such as Staphylococcus aureus, Escherichia sp. such as Escherichia coli, and mixtures thereof.

According to one embodiment the at least one strain of mould is selected from the group comprising of Acremonium sp., Alternaria sp., Aspergillus sp. such as Aspergillus niger, Aureobasidium sp., such as Aureobasidium pullulans, Cladosporium sp., Fusarium sp., Mucor sp., Penicillium sp., such as Penicillium funiculosum, Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp., and mixtures thereof.

According to one embodiment the at least one strain of yeast is selected from the group comprising Saccharomycotina, Taphrinomycotina, Schizosaccharomycetes, Basidiomycota, Agaricomycotina, Tremellomycetes, Pucciniomycotina, Microbotryomycetes, Candida sp. such as Candida albicans, Candida tropicalis, Candida stellatoidea, Candida glabrata, Candida krusei, Candida guilliermondii, Candida viswanathii, Candida lusitaniae and mixtures thereof, Yarrowia sp. such as Yarrowia lipolytica, Cryptococcus sp. such as Cryptococcus gattii and Cryptococcus neofarmans, Zygosaccharomyces sp., Rhodotorula sp. such as Rhodotorula mucilaginosa, and mixtures thereof.

According to one embodiment the at least one strain of alga is selected from the group of Nostoc commune, Gloeocapsa alpicola (syn. Anacystis montana), Klebsormidium flaccidum, Stichococcus bacillaris, Pseudokirchneriella subcapitata, Desmodesmus subspicatus, Navicula pelliculosa, Anabaena flosaquae, Synechococcus leopoliensis, and mixtures thereof.

According to a preferred embodiment of the present invention, the at least one strain of bacteria is selected from the group consisting of Escherichia coli, Staphylococcus aureus, Pseudomonas putida, Pseudomonas mendocina, Pseudomonas oleovorans, Pseudomonas fluorescens, Pseudomonas alcaligenes, Pseudomonas pseudoalcaligenes, Pseudomonas entomophila, Pseudomonas syringae, Methylobacterium extorquens, Methylobacterium radiotolerants, Methylobacterium dichloromethanicum, Methylobacterium organophilu, Hyphomicrobium zavarzini, Enterococcus faecalis, Myroides odoratus, Pseudomonas aeruginosa, Pseudomonas orizyhabitans, Burkholderia cepacia, Alcaligenes faecalis and Sphingomonas paucimobilis and mixtures thereof and/or the at least one strain of mould is selected from the group comprising of Penicillium funiculosum, Aspergillus niger, Aureobasidium pullulans, Alternaria alternate, Cladosporium cladosporioides, Phoma violaceae, Ulocladium atrum, Aspergillus versicolor, Stachybotris chartarum, Penicillium purpurogenum, Rhodotorula mucilaginosa and/or the at least one strain of yeast is selected from the group of Candida albicans and/or the at least one strain of alga is selected from the group of Nostoc commune, Gloeocapsa alpicola (syn. Anacystis montana), Klebsormidium flaccidum, Stichococcus bacillaris, Pseudokirchneriella subcapitata, Desmodesmus subspicatus, Navicula pelliculosa, Anabaena flosaquae, Synechococcus leopoliensis, and mixtures thereof.

The inventive surface-treated surface-reacted calcium carbonate may be incorporated into an article in order to provide an article with enhanced antimicrobial activity. According to a further aspect of the present invention, an article is provided comprising a surface-treated surface-reacted calcium carbonate obtainable by a process according to the present invention or a composition comprising the same, wherein the article is selected from paper products, engineered wood products, plasterboard products, polymer products, hygiene products, medical products, healthcare products, filter products, woven materials, nonwoven materials, geotextile products, agriculture products, horticulture products, clothing, footwear products, baggage products, household products, industrial products, packaging products, building products, and construction products.

Method for the control of odour

According to the present invention a method for the control of odour by contacting the surface-treated surface-reacted calcium carbonate obtainable by the process according to the present invention with odorants is provided, wherein the at least one water soluble metal salt of step (ii) is a copper salt selected from the group consisting of copper nitrate, copper sulphate, copper acetate, copper chloride, copper fluoride, copper bromide, hydrates thereof and mixtures thereof, and most preferably is selected from the group consisting of copper sulphate, hydrates thereof and mixtures thereof.

According to another embodiment of the present invention a method for the control of odour by contacting the surface-treated surface-reacted calcium carbonate obtainable by the process comprising the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate,

is provided, wherein the at least one water soluble metal salt of step (ii) is a copper salt selected from the group consisting of copper nitrate, copper sulphate, copper acetate, copper chloride, copper fluoride, copper bromide, hydrates thereof and mixtures thereof, and most preferably is selected from the group consisting of copper sulphate, hydrates thereof and mixtures thereof.

"Odor" according to the present invention generally is defined as one or more volatilized chemical compounds, generally at a very low concentration, that humans or other animals perceive by the sense of olfaction. Accordingly, an "odorant" is a chemical compound that has a smell or odour, i.e. is sufficiently volatile to be transported to the olfactory system in the upper part of the nose.

Preferred odours to be controlled according to the present invention are odours which cause an unpleasant sensation, i.e. malodours, but are not limited thereto.

Such odours may originate from odorants, which are preferably selected from the group comprising odorants contained in human and animal body liquids and secretion such as menses, blood, plasma, sanies; vaginal secretions, mucus, milk, urine; faeces; vomit and perspiration; odorants originating from putrefaction such as of human or animal tissue; food such as dairy products, meat and fish and fruit such as durian fruit.

According to one preferred embodiment of the present invention the odorants are selected from the group consisting of amines such as triethylamine, diethylamine, trimethylamine, diaminobutane, tetramethylenediamine, pentamethylenediamine, pyridine, indole, 3-methylindole; carboxylic acids such as propionic acid, butanoic acid, 3-methylbutanoic acid, 2-methylpropanoic acid, hexanoic acid; sulphur organic compounds such as thiols, e.g. methanethiol, phosphor organic compounds such as methylphosphine, dimethylphosphine, their derivatives and mixtures thereof; preferably the odorants are amines and most preferably the odorant is diethylamine.

According to an exemplified embodiment of the present invention the odorants are diethylamine or a thiol, for example 2-propanethiol.

The method for the control of odour according to the present invention comprises the step of contacting the surface-treated surface-reacted calcium carbonate obtainable by the process according to the present invention with odorants. The contacting may be prepared by any method known to the person skilled in the art. For example, the surface-treated surface-reacted calcium carbonate obtainable by the process according to the present invention can be mixed with the odorants. The surface-treated surface-reacted calcium carbonate obtainable by the process according to the present invention may be provided in solid form, for example as powder, or in form of a suspension, for example an aqueous suspension. According to a preferred embodiment the surface-treated surface-reacted calcium carbonate obtainable by the process according to the present invention may be provided in solid form, for example as powder.

Alternatively, the surface-treated surface-reacted calcium carbonate obtainable by the process according to the present invention can be coated onto or incorporated into a possible material, for example a paper or a plastic material and afterwards this material can be contacted with the odorants.

The scope and interest of the invention will be better understood based on the following examples which are intended to illustrate certain embodiments of the present invention and are non-limitative.

## Examples

### 1. Measurement methods

In the following, measurement methods implemented in the examples are described.

### Brookfield viscosity

The Brookfield viscosity was measured after one minute of stirring at 25 °C $\pm$ 3 °C at 100 rpm by the use of a Brookfield viscometer type RV equipped with an appropriate disc spindle, for example spindle 2 to 5.

### Solid content

The suspension solids content (also known as "dry weight") is determined using a Moisture Analyser MJ33 (Mettler-Toledo, Switzerland), with the following settings: drying temperature of 150 °C, automatic switch off if the mass does not change more than 1 mg over a period of 30 s, standard drying of 5 to 20 g of suspension.

Particle size distribution

Volume median grain diameter $d_{50}$ was evaluated using a Malvern Mastersizer 2000 Laser Diffraction System. The $d_{50}$ or $d_{98}$ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight determined median particle size $d_{50}$(wt) was measured by the sedimentation method, which is an analysis of sedimentation behaviour in a gravimetric field. The measurement was made with a Sedigraph™ 5100 or 5120 of Micromeritics Instrument Corporation, USA. The method and the instrument are known to the skilled person and are commonly used to determine particle size distributions of fillers and pigments. The measurement was carried out in an aqueous solution of 0.1 wt.-% $Na_4P_2O_7$. The samples were dispersed using a high speed stirrer and supersonicated.

Specific surface area (SSA)

The specific surface area was measured by use of a ASAP 2460 instrument from Micromeritics via the BET method according to ISO 9277:2010 using nitrogen, following conditioning of the sample by heating at 100 °C under vacuum for a period of 30 minutes. Prior to such measurements, the sample was filtered within a Büchner funnel, rinsed with deionised water and dried overnight at 90 to 100 °C in an oven. Subsequently, the dry cake was ground thoroughly in a mortar and the resulting powder was placed in a moisture balance at 130 °C until a constant weight was reached.

Intra-particle intruded specific pore volume (in $cm^3/g$)

The specific pore volume was measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m (~ nm). The equilibration time used at each pressure step was 20 seconds. The sample material was sealed in a 3 $cm^3$ chamber powder penetrometer for analysis. The data were corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 $\mu$m down to about 1 - 4 $\mu$m showing the coarse packing of the sample between any agglomerate structures contributing strongly. Below these diameters lies the fine inter-particle packing of the particles themselves. If they also have intra-particle pores, then this region appears bi-modal, and by taking the specific pore volume intruded by mercury into pores finer than the modal turning point, i.e. finer than the bi-modal point of inflection, the specific intra-particle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the inter-particle pore region and the intra-particle pore region, if present. Knowing the intra-particle pore diameter range it is possible to subtract the remainder inter-particle and inter-agglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Water pick-up

The moisture pick up susceptibility of a material as referred to herein is determined in mg moisture/g after exposure to an atmosphere of 10 and 85 % relative humidity, respectively, for 2.5 h at a temperature of +23 °C ($\pm$ 2 °C). For this purpose, the sample is first kept at an atmosphere of 10% relative humidity for 2.5 h, then the atmosphere is changed to 85% relative humidity at which the sample is kept for another 2.5 h. The weight increase between 10 and 85 % relative humidity is then used to calculate the moisture pick-up in mg moisture/g of sample.

Moisture content

The moisture content is been determined on a Karl-Fischer Coulometer (C 30 oven: Mettler Toledo Stromboli, Mettler Toledo, Switzerland) at 220 °C under nitrogen (flow 80 ml/min, heating time 10 min). The accuracy of the result is checked with a HYDRANAL-Water Standard KF-Oven (Sigma-Adrich, Germany), measured at 220 °C).

X-ray diffraction (XRD)

XRD experiments are performed on the samples using rotatable PMMA holder rings. Samples are analysed with a Bruker D8 Advance powder diffractometer obeying Bragg's law. This diffractometer consists of a 2.2 kW X-ray tube, a sample holder, a $\vartheta$-$\vartheta$-goniometer, and a VÅNTEC-1 detector. Nickel-filtered Cu K$\alpha$ radiation is employed in all experiments. The profiles are chart recorded automatically using a scan speed of 0.7° per min in 2$\vartheta$. The resulting powder diffraction pattern can easily be classified by mineral content using the DIFFRACsuite software packages EVA and SEARCH, based on reference patterns of the ICDD PDF 2 database. Quantitative analysis of diffraction data refers to the determination of amounts of different phases in a multi-phase sample and has been performed using the DIFFRACsuite software package TOPAS. In detail, quantitative analysis allows to determine structural characteristics and phase proportions with quantifiable numerical precision from the experimental data itself. This involves modelling the full diffraction pattern (Rietveld approach) such that the calculated pattern(s) duplicates the experimental one. The Rietveld method requires knowledge of the approximate crystal structure of all phases of interest in the pattern. However, the use of the whole pattern rather than a few select lines produces accuracy and precision much better than any single-peak-intensity based method.

Pigment whiteness R457

Pigment whiteness R457 is measured on a tablet (prepared on an Omyapress 2000, pressure = 4 bar, 15 s) using a Datacolor ELREPHO (Datacolor AG, Switzerland) according to ISO 2469:1994 (DIN 53145-1:2000 and DIN 53146:2000).

CIELAB coordinates

The CIELAB L*, a*, b*, coordinates are measured using a Datacolor ELREPHO (Datacolor AG, Switzerland) according to EN ISO 11664-4 and barium sulphate as standard.

Yellow Index

The CIE coordinates are measured using a Datacolor ELREPHO (Datacolor AG, Switzerland). The yellow index (= YI) is calculated by the following formula:

$$YI = 100*(R_x - R_z)/R_y).$$

Inductively coupled plasma optical emission spectrometry ICP-OES

To determine the amount of the water insoluble metal compound formed on the surface of the surface-reacted calcium carbonate that can be detached from the surface the amount of the water insoluble metal compound leaching into water from the surface of the surface-treated surface-reacted calcium carbonate is determined.
Either the filtrate from each filtration step of the preparation of a surface-treated surface-reacted calcium carbonate subsequent to the reaction is analysed (for Powder 1) or 100 g of a surface-treated surface-reacted calcium carbonate is stirred in 1 l of water (room temperature, mechanical stirrer, 2 h), filtered, and the filtrate is analysed (for Powder 6, washing procedure repeated 3 times) by ICP-OES to determine the amount of the water insoluble metal compound which has been solubilized in water.
ICP-OES is made on an Optima 8300 DV device (dual viewing) with a cyclonic spray chamber (Twister) from Perkin Elmer (Copper lines Cu 224.7, Cu 324.752, Cu 327.393). The powder samples (1.0 g) are dissolved in $HNO_3$ (69 %, trace select) and boiled for 5 minutes. After cooling, the solutions are diluted with water, filtered (0.20 mm) and analysed by ICP-OES. The filtrate samples are acidified with $HNO_3$ (69%, trace select), filtered (0.20 mm) and analysed by ICP-OES.

Antimicrobial surface activity test

Fresh bacteria cultures of the bacteria *Escherichia coli* DSM 1576 and *Staphylococcus aureus* DSM 346 strains were prepared by dilution streaking onto a tryptic soy agar plate (TSA, no. 236950, Becton Dickinson and Company, USA) and incubation for 16 to 20 h at 35 °C.

To test the antimicrobial surface activity, the Japanese Standard Protocol

JIS Z 2801 2000 was followed using fresh bacteria prepared as described above. The plating, counting and evaluation were done according to the Japanese Standard Protocol JIS Z 2801 2000 with the following amendments: For all coated samples, the bacteria were released after incubation from the test item in a petri dish using a sterile Drigalski spatula to massage the test item with medium, instead of using a stomacher bag and massaging the item by hand. Further, for coated samples the test items were not sterilized with 70 % ethanol prior analysis.

As described in the Japanese Standard Protocol JIS Z 2801 2000, the bacterial counts are reported as colony forming units per test item (cfu/test item) with 10 cfu/test item as limit of detection (LOD). Thereof the antimicrobial activity (R) of the test items was calculated as described in the Japanese Standard Protocol JIS Z 2801 2000. For it, after 24 h incubation at 35 °C, the average number of viable bacteria on the test item (B) and the untreated control (A) are used to calculate the antimicrobial activity (R) using the following formula: $R = \log_{10}(A/B)$. If zero cfu were detected, a value of 10 cfu/ test item was used for calculation of the limit of detection of the antimicrobial activity.

Fungal growth resistance test

Fresh cultures of fungi (*Aspergillus niger* (DSM 1975)) were prepared by inoculation of malt agar plates (malt extract broth, no. 1.05397, Merck KGaA, Germany) containing 1.5 wt.-% agar (no. 05039, Fluka, Switzerland) with spores and/or mycelia of fungi and incubation at 25 °C until the malt agar plate is fully covered with spores (approximately 1 week). Such culture techniques are well known to the skilled person and are described for instance in ASTM D5590-00.

Malt extract broth (no. 1.05397, Merck KGaA, Germany) was inoculated with loop of spores from a fresh fungal malt agar plate. Spores were dispersed by mixing until no clumps were visible. Test items were cut to 2.5 cm x 9 cm and immersed into the spore-dispersion, drained and placed into 50 ml bioreactor tubes with a gas permeable filter (e.g. TPP TubeSpin® Bioreactors, TPP, Switzerland). Test items in the bioreactors were incubated upright at 28 °C and 90 % relative humidity. After different incubation times the percentage of fungal defacement was rated analogous to the rating system of ASTM D3273-D12.

A rating of 10 = 0 defacement (no growth detectable).

A rating of 9 = 1 to 10% defacement.

A rating of 8 = 11 to 20% defacement.

A rating of 7 = 21 to 30% defacement.

A rating of 6 = 31 to 40% defacement.

A rating of 5 = 41 to 50% defacement.

A rating of 4 = 51 to 60% defacement.

A rating of 3 = 61 to 70% defacement.

A rating of 2 = 71 to 80% defacement.

A rating of 1 = 81 to 90% defacement.

A rating of 0 = 91 to 100% defacement.

The antialgal efficacy test

The antialgal efficacy was determined according to the test norm DIN EN 15458:2007 (Paint and varnishes - Laboratory test method for testing the efficacy of film preservatives in a coating against algae) using *Stichococcus bacillaris* as test organism.

The principle of the semi-quantitative test method is that the coating sample containing the film preservative, or the untreated control, is placed onto a nutrient agar surface with the coating faced-up. Then the surface is inoculated with a standard algal spore suspension and incubated. At four different time points (after 14, 21, 28 and 35 days) the intensity of the algal growth on the surface of the coating sample and the algal growth on the agar (surrounding the test pieces) is evaluated and compared to the control using the following rating system.

0: No algal growth on the surface of the coating sample

1: less algal growth on the coating sample containing modified mineral-based filler compared to sample containing untreated mineral.

2. equal or more algal growth on the coating sample containing modified mineral-based filler compared to sample containing untreated mineral.

The test norm was performed in triplicates with a few minor amendments:

1) All coating samples were not conditioned according to EN23270 for 5 days at 23 +/-2 °C and 50 +/-5 % relative humidity but instead stored for several weeks at 23 +/-2 °C without controlled humidity.
2) All coating samples were not sterilized prior testing.
3) The size and shape of all coating samples was rectangular (25 mm x 50 mm) instead of circular (55 mm diameter).
4) The final evaluation was carried out at day 32.
5) The antialgal efficacy was only tested against green algae *Stichococcus bacillaris* and not against a mixture of a green and a blue algae defined by the norm.

**2. Preparation of the metal containing solutions**

<u>Solution 1</u>

80 g of deionized water is provided in a beaker glass, and 39 g copper sulphate (pentahydrate, Sigma-Aldrich, Spain) is added slowly, under strong stirring. The resulting deep blue mixture is stirred 2 h at room temperature and then filtered. The solid content of the obtained solution is between 20 and 24 wt.-%, based on the total weight of the solution.

<u>Solution 2</u>

A saturated solution of zinc sulphate is prepared by adding zinc sulphate heptahydrate (350 g, Sigma-Aldrich, USA)) in deionised water (215 g). The resulting colourless mixture is stirred 2 h at room temperature and then filtered. The solid content of the obtained solution is 39 wt.-%, based on the total weight of the solution.

**3. Preparation of the surface-treated surface-reacted calcium carbonate**

In the following description of the preparation of the Examples and Comparatives Examples the indication of weight in form of "parts" always refers to "parts by weight", unless indicated otherwise.
The sureface-reacted calcium carbonate used in the following examples SRCC shows the following characteristics: $d_{50}$ = 2.6 $\mu$m, BET specific surface area = 34.7 m$^2$/g, and an intra-particle intruded specific pore volume of 0.305 cm$^3$/g (for the pore diameter range of 0.004 to 0.19 $\mu$m).

<u>3.1. Example 1 - Powder 1</u>

A suspension of 150 g of surface-reacted calcium carbonate (SRCC) in deionized water (600 ml) is placed in a 1 l round bottom flask equipped with a condenser and an addition funnel. The mixture is heated to reflux and a 150 g of a previously prepared solution 1 (20 wt.-% solid content solution, corresponding to 30 g of copper sulphate) is added dropwise to the mixture. The suspension turns green in colour, and heating is continued for another 2 h (with stirring at 700 rpm) after completion of the addition. The heating is then stopped and the suspension is filtered on a Buchner funnel, and washed with 1 l deionized water. The filtrate is colourless, and the filter cake (green powder) is redispersed again in 1 l deionized water, stirred and filtered again. This washing procedure is repeated 3 times, and the obtained filter cake is then dried in an oven (90 °C, reduced pressure). The obtained green powder (Powder 1) is then analysed by XRD
Amount of copper salt (based on the calculated amount of anhydrous copper sulphate and surface-reacted calcium carbonate before treatment):

0.2 gram $CuSO_4$ per gram SRCC
5.8 mg $CuSO_4$ per m$^2$ SRCC

<u>3.2. Example 2 - Powder 2</u>

200 g of dry surface-reacted calcium carbonate (SRCC) and 5 g of powder 1 are placed in a high speed mixer (MTI Mixer, MTI Mischtechnik International GmbH, Germany), and the mixture is homogenized by stirring 10 min (500 rpm, 30 °C). After that time, the mixture is collected. A slightly green homogeneous powder is obtained (Powder 2).
Amount of copper salt (based on the calculated amount of anhydrous copper sulphate and surface-reacted calcium carbonate before treatment):

0.005 gram $CuSO_4$ per gram SRCC
0.15 mg $CuSO_4$ per m$^2$ SRCC

3.3. Example 3 - Powder 3

500 g of dry surface-reacted calcium carbonate (SRCC) is placed in a high speed mixer (MTI Mixer, MTI Mischtechnik International GmbH, Germany), and conditioned by stirring for 10 min (3 000 rpm, 120 °C). After that time, 1 part of copper sulphate (25 g of solution 1 having 20 wt.-% solid content) relative to 100 parts SRCC is introduced and stirring is continued for another 20 min (120 °C, 3 000 rpm). After that time, 1 additional part of copper sulphate (25 g of solution 1 having 20 wt.-% solid content) relative to 100 parts SRCC is introduced again and stirring is continued for another 20 mins (120 °C, 3 000 rpm). After that time, the mixture is allowed to cool and collected. A slightly green homogeneous powder is obtained (Powder 3).

Amount of copper salt (based on the calculated amount of anhydrous copper sulphate and surface-reacted calcium carbonate before treatment):

0.02 gram $CuSO_4$ per gram SRCC
0.58 mg $CuSO_4$ per $m^2$ SRCC

3.4. Example 4 - Powder 4

A suspension of 200 g of surface-reacted calcium carbonate (SRCC) in deionized water (300 ml) is placed in a 1 l round bottom flask equipped with a condenser and an addition funnel. To this mixture is added $Na_2CO_3$ (0.25 mol, 26.5 g dissolved in 100 ml deionized water) and the mixture is heated to reflux and 150 ml of a previously prepared solution 1 (0.25 mol of copper sulphate pentahydrate, 62.5 g of copper sulphate pentahydrate dissolved in 200 ml deionized water) is added dropwise to the mixture. The suspension turns green in colour, and heating is continued for another 3 h reflux, stirring at 800 rpm) after completion of the addition. The heating is then stopped and the suspension is filtered on a Buchner funnel, and washed 3 times with 1.5 l of deionized water. The obtained filter cake is then redispersed in 1 l deionized water, and spray dried with a GEA Niro Mobile Minor spray drier using the following conditions:

Temperature inlet: 200°C
Temperature outlet: >85°C
Nebulizing pressure: 6 bar

The pump speed is adjusted depending on the outlet temperature.
The obtained green powder (Powder 4) is then analysed by XRD
Amount of copper salt (based on the calculated amount of anhydrous copper sulphate and surface-reacted calcium carbonate before treatment):

0.2 gram $CuSO_4$ per gram SRCC
5.8 mg $CuSO_4$ per $m^2$ SRCC

3.5. Example 5 - Powder 5

350 g of dry surface-reacted calcium carbonate (SRCC) is placed in a high speed mixer (MP Tischmischer, SomakonVerfahrenstechnik UG, Germany), and conditioned by stirring for 10 min (500 rpm, 120 °C, scraper speed 50 %, with an open outlet for water evaporation). After that time, the stirring speed is increased to 600 rpm, and 3.5 g of a 20 wt.-% solution 1 (corresponding to 0.2 part per hundred parts SRCC) is added dropwise to the mixture over 2 min. The stirring speed is then gradually increased to 1 000 rpm, and stirring is continued for a total time of 20 min at 120 °C. After that time, the mixture is allowed to cool and collected. A very slightly green homogeneous powder is obtained (Powder 5).

Amount of copper salt (based on the calculated amount of anhydrous copper sulphate and surface-reacted calcium carbonate before treatment):

0.002 gram $CuSO_4$ per gram SRCC
0.058 mg $CuSO_4$ per $m^2$ SRCC

3.6. Example 6 - Powder 6

300 g of dry surface-reacted calcium carbonate (SRCC) is placed in a high speed mixer (MP Tischmischer, SomakonVerfahrenstechnik UG, Germany), and conditioned by stirring for 10 min (500 rpm, 120 °C, scraper speed 50 %, with an open outlet for water evaporation). After that time, 150 g of a 20 wt.-% solution 1 (corresponding to 10 parts per hundred parts modified calcium carbonate) is added dropwise to the mixture. The stirring speed is continued for a total time of 20 min at 120 °C. After that time, the mixture is allowed to cool and collected. A green homogeneous powder is obtained (Powder 6).

Amount of copper salt (based on the calculated amount of anhydrous copper sulphate and surface-reacted calcium carbonate before treatment):

0.1 gram $CuSO_4$ per gram SRCC
2.9 mg $CuSO_4$ per m$^2$ SRCC

3.7. Example 7 - Powder 7

A suspension of 400 g of surface-reacted calcium carbonate (SRCC) in deionized water (3 l) is placed in a 5 l beaker. The mixture is heated to 80 °C for 1 h (stirring 300 rpm) and a 194.6 g of a previously prepared solution 3 (41.1 wt.-% solid content solution, corresponding to 80 g of dry copper nitrate) is added dropwise to the mixture. The suspension turns green in colour, and heating is continued for another 2 h (with stirring at 300 rpm) after completion of the addition. The heating is then stopped and the suspension is filtered on a Buchner funnel, and washed with 3 l deionized water. The filtrate is colourless, and the filter cake (green powder) is redispersed again in 3 l deionized water, stirred and filtered again. The obtained filter cake is then dried in an oven (120 °C, 7 h). The obtained green powder (Powder 7) is then analysed by XRD

Amount of copper salt (based on the calculated amount of anhydrous copper nitrate and surface-reacted calcium carbonate before treatment):

0.2 gram $CuSO_4$ per gram SRCC
5.8 mg $CuSO_4$ per m$^2$ SRCC

3.8. Comparative Example 1 - Powder C1

Comparative Example 1 is a surface-reacted calcium carbonate (SRCC), without further treatment (Powder C1).

3.9. Comparative Example 2 - Powder C2

A suspension of 150 g of surface-reacted calcium carbonate (SRCC) in deionized water (600 ml) is placed in a 1 l round bottom flask equipped with a condenser and an addition funnel. The mixture is heated to reflux for 2 h (with stirring at 700 rpm). The heating is then stopped and the suspension is filtered on a Buchner funnel, and washed with 1 l deionized water. The filtrate is colourless, and the filter cake (white powder) is then dried in an oven (90 °C, reduced pressure). A white powder (Powder C2) is obtained.

Table 1: Overview of prepared surface-treated surface-reacted calcium carbonate with copper salt.

| Powder | $CuSO_4$ [parts per hundred parts SRCC] | $Na_2CO_3$ [parts per hundred parts SRCC] | $Cu(NO_3)_2$ [parts per hundred parts SRCC] | comments |
|---|---|---|---|---|
| C1 | - | - | | - |
| C2 | - | - | | Suspended in water and dried |
| 1 | 20 | - | | Wet process |
| 2 | 0.5 | - | | Mixture of treated/ untreated SRCC |
| 3 | 2 | - | | Dry process |
| 4 | 20 | 13.3 | | Wet process. |
| 5 | 0.2 | - | | Dry process |
| 6 | 10 | | | Dry process |
| 7 | | | 20 | Wet process. |

Table 2: Quantitative Rietveld analyses (XRD) of the powders C1, 1 and 4.

| Mineral | Formula | Powder C1 | Powder 1 | Powder 4 |
|---|---|---|---|---|
| Calcite | $CaCO_3$ | 73.7 | 60.3 | 64.5 |
| Hydroxylapatite | $Ca_5(OH)(PO_4)_3$ | 26.3 | 23.3 | 25.1 |
| Gypsum | $CaSO_4 \cdot 2H_2O$ | | 6.3 | - |
| Chalcocite | $Cu_2S$ | | 0.2 | - |
| Brochantite | $Cu_4SO_4(OH)_6$ | | 2.1 | 2.7 |
| Posnjakite | $Cu_4(SO_4)(OH)_6 \cdot H_2O$ | | 2.4 | - |
| Deviline | $CaCu_4(SO_4)_2(OH)_6 \cdot 3H_2O$ | | 2.7 | - |
| Copper Hydrogen Phosphate Hydrate | $CuHPO_4 \cdot H_2O$ | | 2.7 | - |
| Malachite | $Cu_2CO_3(OH)_2$ | | / | 7.7 |
| other constituents | - | | / | - |
| Total | | 100 | 100 | 100 |
| Data are normalized to 100 % crystalline material. | | | | |

Table 3: Brightness analysis ($BaSO_4$) of the powders C1, 3, 4 and 5.

| Sample | Powder C1 | Powder 3 | Powder 4 | Powder 5 |
|---|---|---|---|---|
| Rx (%) | 97.7 | 89.6 | 76.5 | 96.1 |
| Ry (%) | 96.9 | 91.8 | 82.4 | 96.3 |
| Rz (%) | 95.7 | 91.6 | 82.3 | 95.2 |
| R457 TAPPI (%) | 95.7 | 91.9 | 83.0 | 95.3 |
| Yellowness Index | 1.5 | -1.8 | -5.6 | 1.1 |
| CIELAB L* | 98.8 | 96.8 | 92.9 | 98.5 |
| CIELAB a* | -0.03 | -3.04 | -8.99 | -0.50 |
| CIELAB b* | 0.81 | 0.29 | 0.69 | 0.77 |

Table 4: Water pick-up of the powders C1 and 1 to 5.

| Sample | Water pick-up (mg/g) |
|---|---|
| C1 | 21.4 |
| 1 | 21.9 |
| 2 | n.d. |
| 3 | n.d. |
| 4 | 22.5 |
| 5 | 22.0 |

Inductively coupled plasma optical emission spectrometry (ICP-OES)

The amount of copper leaching into water from the surface of the surface-treated surface-reacted calcium carbonate powders 1 and 6 is determined as followed:
Powder 1: To determine the amount of copper leaching into water, the filtrate from each filtration step (see preparation of powder 1) subsequent to the reaction is analysed by ICP-OES to determine the copper amount which had been solubilized in water.

Powder 6: To determine the amount of copper leaching into water, 100 g of powder from the invention are stirred in 1 l of water (room temperature, mechanical stirrer, 2 h). After that time the mixture is filtered, and the filtrate is analysed. This procedure is repeated several times.

Table 4b: ICP-OES analysis of filtrates from washing procedure of powders 1 and 6.

|  |  | Amount of Cu in filtrate (wt.-%) |
|---|---|---|
| Powder 1 | 1st washing step (1 l water) | < 1 ppm |
|  | 2nd washing step (1 l water) | < 1 ppm |
|  | 3rd washing step (1 l water) | < 1 ppm |
|  | 4th washing step (1 l water) | < 1 ppm |
| Powder 6 | 1st washing step (1 l water) | < 1 ppm |
|  | 2nd washing step (1 l water) | < 1 ppm |
|  | 3rd washing step (1 l water) | < 1 ppm |

Table 4c: Composition of filtered powders after washing steps

|  | Amount of Cu in powder (wt%) |
|---|---|
| Powder 6 | 3.4 |
| Powder 7 | 9.2 |

### 3.10 Example 8 - Powder 8

420 g of dry surface-reacted calcium carbonate (SRCC) is placed in a Lödige mixer (M5 R-MK, Gebrüder Lödige Maschinenbau GmbH, Germany) at room temperature. Stirring is activated and 4.8 parts relative to 100 parts modified calcium carbonate of iron sulphate heptahydrate (Sigma Aldrich, India, 90 g of a previously prepared 22.3 wt.-% aqueous solution) is added dropwise with a peristaltic pump (addition time: approx. 1 h) and stirring is continued at room temperature for 20 min after addition. This treatment level corresponds to approx. 1.38 mg/m$^2$. After that time, the mixture is taken out of the mixer. A beige/brown powder is collected (Powder 8).

### 3.11. Example 9 - Powder 9

A suspension of 400 g of surface-reacted calcium carbonate (SRCC) in deionized water (3 l) is placed in a 5 l beaker. The mixture is heated to 80 °C for 1 h (stirring 300 - 400 rpm) and 254 g of a saturated iron (II) sulphate heptahydrate solution (23.6 wt.-% solid content solution, corresponding to 20 parts of dry iron sulphate relative to 100 parts surface-reacted calcium carbonate) is added dropwise to the mixture. The suspension turns brown in colour, and heating is continued for another 2 h (with stirring at 300 - 400 rpm) after completion of the addition. The heating is then stopped and the suspension is filtered on a Buchner funnel. The filter cake is redispersed 2 times in 2 l deionized water, stirred and filtered again. The obtained filter cake is then dried in an oven (120 °C, 7 h). The obtained brown powder (Powder 9) is then analysed by XRD

Amount of iron salt (based on the calculated amount of iron sulphate and surface-reacted calcium carbonate before treatment):

0.2 gram iron sulphate per gram SRCC
5.8 mg iron sulphate per m$^2$ SRCC

Table 5: Overview of the surface-treated surface-reacted calcium carbonate with iron salts.

| Powder | FeSO$_4$ [parts per hundred parts SRCC] | comments |
|---|---|---|
| C1 | - | - |

(continued)

| Powder | FeSO$_4$ [parts per hundred parts SRCC] | comments |
|---|---|---|
| C2 | - | Suspended in water and dried |
| 8 | 4.8 | Dry process |
| 9 | 20 | Wet process |

3.12. Example 10 - Powder 10

A suspension of 300 g of surface-reacted calcium carbonate (SRCC) in deionized water (2.5 l) is placed in a 5 l beaker equipped with a mechanical stirrer and an addition funnel. The mixture is heated to 80 °C and 153.8 g of a previously prepared solution 2 (39 wt.-% solid content solution, corresponding to 60 g of zinc sulphate) is added dropwise to the mixture. The suspension remains white, and heating is continued for another 2 h (stirring at 400 rpm) after completion of the addition. The heating is then stopped and the suspension is filtered on a Buchner funnel. The filtrate is colourless, and the filter cake (white powder) is redispersed again in 2 l deionized water, stirred and filtered again. This washing procedure is repeated a second time, and the obtained filter cake is then dried in a drying oven (120 °C). A white powder (Powder 10) is obtained.

Amount of zinc salt (based on the calculated amount of anhydrous zinc sulphate and surface-reacted calcium carbonate before treatment):

0.2 gram ZnSO$_4$ per gram SRCC
5.8 mg ZnSO$_4$ per m$^2$ SRCC

3.13. Example 11 - Powder 11

A suspension of 300 g of surface-reacted calcium carbonate (SRCC) in deionized water (2.5 l) is placed in a 5 l beaker equipped with a mechanical stirrer and an addition funnel. To this mixture is first added 39.3 g of sodium carbonate (anhydrous, Fluka, Germany) at room temperature. The mixture is then heated to 80 °C and 153.8 g of a previously prepared solution 2 (39 wt.-% solid content solution, corresponding to 60 g of zinc sulphate) is added dropwise to the mixture. The suspension remains white, and heating is continued for another 2 h (stirring at 400 rpm) after completion of the addition. The heating is then stopped and the suspension is filtered on a Buchner funnel. The filtrate is colourless, and the filter cake (white powder) is redispersed again in 2 l deionized water, stirred and filtered again. This washing procedure is repeated a second time, and the obtained filter cake is then dried in a drying oven (120 °C). A white powder (Powder 11) is obtained.

Amount of zinc salt (based on the calculated amount of anhydrous zinc sulphate and surface-reacted calcium carbonate before treatment):

0.2 gram ZnSO$_4$ per gram SRCC
5.8 mg ZnSO$_4$ per m$^2$ SRCC

3.14. Example 12 - Powder 12

300 g of dry surface-reacted calcium carbonate (SRCC) is placed in a high speed mixer (MP Tischmischer, SomakonVerfahrenstechnik UG, Germany), and conditioned by stirring for 10 min (600 rpm, 120 °C, scraper speed 50 %, with an open outlet for water evaporation). After that time, 76.9 g of a previously prepared solution of zinc sulphate (39 wt.-% solid content solution, corresponding to 30 g of zinc sulphate) is added dropwise to the mixture. The stirring speed is continued for a total time of 20 min at 120 °C. After that time, the mixture is allowed to cool and collected. A white homogeneous powder is obtained (Powder 12).

Amount of zinc salt (based on the calculated amount of anhydrous zinc sulphate and surface-reacted calcium carbonate before treatment):

0.1 gram ZnSO$_4$ per gram SRCC
2.9 mg ZnSO$_4$ per m$^2$ SRCC

Table 6: Overview of prepared surface-treated surface-reacted calcium carbonate.

| Powder | ZnSO$_4$ [parts per hundred parts SRCC] | Na$_2$CO$_3$ [parts per hundred parts SRCC] | comments |
|---|---|---|---|
| C1 | - | - | - |
| C2 | - | - | Suspended in water and dried |
| 10 | 20 | - | Wet process |
| 11 | 20 | 13 | Wet process |
| 12 | 10 | - | Dry process |

**4. Odor control:**

4.1 Equipment:

- Sorption tube (Sigma Aldrich, stainless steel, ¼ in x 3 ½ in)
- Thermal desorption tube with Tenax TA (Sigma Aldrich, stainless steel, ¼ in x 3 ½ in)
- Pocket pump 210-1000 series (of SKC Inc, Eighty Four, PA, USA)
- TD-GC-MS (Thermal desorption-gas-chromatograph-mass spectrometer): *TD*

*TurboMatrix 650 Perkin Elmer*

Temperature Mode: Tube 250 °C, Valve 250 °C, Transfer 200 °C, Trap Low -20 °C, Trap High 300 °C
Timing: Desorb 10 min, Puge 1.0 min, Trap Hold 5.0 min
Pneumatic settings: Column 160 kPa, Outlet Split 40 ml/min, Inlet Split 20 ml/min, Desorb 30 ml/min

*GC Method Clarus 680 Perkin Elmer*

Column: Optima 5 Accent 1.0 μm, 60m * 0.32 mm, Macherey-Nagel
Temperature of oven: 110 °C for 10 min

*MS Clarus SQ8T Perkin Elmer*

Solvent Delay 0.0 min.
Full scan 25 to 350 m/z (mass/charge) (EI+) for diethylamine analysis
SIR Scan 61, 76 (EI+) for 2-propanethiol analysis.

4.2 Odorants:

Diethylamine (Sigma Aldrich, CAS 109-89-7)
2-propanethiol (Sigma Aldrich, CAS 75-33-2)

4.3 Odorants Control of Diethylamine:

A stock solution of 6.118 g/l diethylamine in water is prepared.

For carrying out the ab/adsorption trials the ab/adsorption tube was filled with the following materials:

Table 7: Filler materials of the ab/adsorption tubes.

| Examples | Filler materials |
|---|---|
| O1 | glas wool |
| O2 | 60 mg of a 1:4 mixture of glass wool and powder C1 |
| O3 | 60 mg of a 1:4 mixture of glass wool and powder 1 |

In front of the sorption tube, a vial filled with 10 $\mu$l of the prepared diethylamine based stock solution is installed, behind the tube a thermal desorption tube with a Tenax TA is installed. The vial was heated for 1 min at 40 °C with a water bath and then, air is sucked from the odorant filled vial through both of the tubes during 5 min by means of a pocket pump (SKC) at a rate of 80 ml/min at room temperature (23 °C). Subsequently, the odorant content in the Tenax TA tube is analysed by means of TD-GC-MS.

The area under the detected peak proportionally corresponds to the odorant (diethylamine) concentration. Therefore, odorant ab/adsorption by different materials or reaction with the different materials can be compared by means of the peak area.

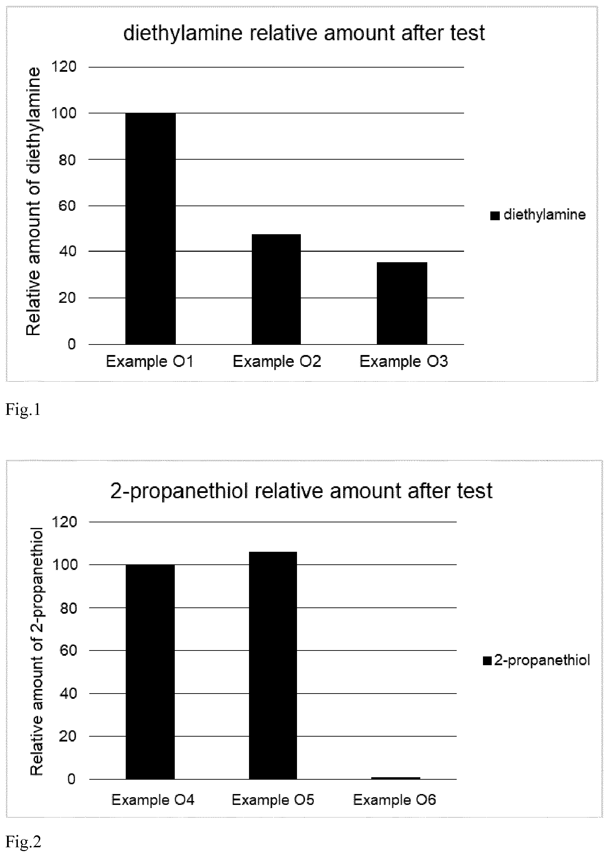

The trials are repeated several times. The average values obtained are summarized in figure 1 reflecting the resulting relative efficiency of the respective samples to remove the odorant, wherein 100 % refers to the maximum value determined for the blank sample (Example O1).

As can be clearly seen from these results, there is an improved efficiency from the surface-treated surface-reacted calcium carbonate (see example O3) to remove diethylamine, compared to untreated powder (see example O2).

4.4 Odorants Control of 2-propanethiol

A stock solution of 0.200 g/l 2-propanethiol in water is prepared.

For carrying out the ab/adsorption trials the ab/adsorption tube is filled with the following materials:

Table 8: Filler materials of the ab/adsorption tubes.

| Examples | Filler materials |
|---|---|
| O4 | glass wool |
| O5 | 120 mg of a 1:4 mixture of glass wool and powder C1 |
| O6 | 120 mg of a 1:4 mixture of glass wool and powder 1 |

In front of the sorption tube, a vial filled with 10 $\mu$l of the prepared 2-propanethiol based stock solution is installed, behind the tube a thermal desorption tube with a Tenax TA is installed. The vial is heated for 1 min at 40 °C with a water bath and then, air is sucked from the odorant filled vial through both of the tubes during 5 min by means of a pocket pump (SKC) at a rate of 80 ml/min at room temperature (23 °C). Subsequently, the odorant content in the Tenax TA tube is analysed by means of TD-GC-MS.

The area under the detected peak proportionally corresponds to the odorant (2-propanethiol) concentration. Therefore, odorant ab/adsorption by different materials or reaction with the different materials can be compared by means of the peak area.

The trials are repeated several times. The average values obtained are summarized in figure 2 reflecting the resulting relative efficiency of the respective samples to remove the odorant, wherein 100 % refers to the maximum value determined for the blank sample (Example O4).

As can be clearly seen from these results, the tube containing the untreated surface-reacted calcium carbonate (powder C1) shows no reduction of the amount of 2-propanethiol detected after the tube (example O5), whereas when surface-treated surface-reacted calcium carbonate powder (example O6) is used in the tube, almost no 2-propanethiol can be detected after it.

5. **Slurries of surface-treated surface-reacted calcium carbonate and paper coatings**

Examples 13 to 17 - Slurries 13 to 17 and comparative examples 3 and 4 (C3 and C4)

Slurries are prepared on a Pendraulik stirrer, by stirring mixtures of the compositions indicated in Table 9 below for 10 min at room temperature with 930 rpm.

**Table 9**: Overview of prepared slurries.

| Example | Powder | Powder [parts] | Water [parts] | DA [parts] | Solid content [wt.-%] | Brookfield viscosity [m·Pas] | pH | Conductivity [mS/cm] |
|---------|--------|----------------|---------------|------------|------------------------|------------------------------|-----|----------------------|
| C3 | C1 | 100 | 100 | 0.7 | 46.7 | 348 | 9.2 | 1.7 |
| C4 | C2 | 100 | 100 | 0.7 | 47.3 | 282 | 9.7 | 1.4 |
| 13 | Powder 1 | 100 | 140 | 0.7 | 40.8 | 2240 | 8.2 | 3.6 |
| 14 | Powder 2 | 100 | 98 | 0.7 | 48.9 | 407 | 8.9 | 2.0 |
| 15 | Powder 3 | 100 | 100 | 0.7 | 47.2 | 932 | 8.1 | 4.2 |
| 16 | Powder 5 | 100 | 100 | 0.7 | 45.6 | 208 | 8.8 | 2.2 |
| 17 | Powder 4 | 100 | 100 | 0.7 | 48.1 | n.d. | 9.4 | 2.9 |
| DA = dispersing agent (100 % sodium-neutralised polyacrylate, $M_w$ = 3 500 g/mol, pH = 8). | | | | | | | | |

Examples 18 to 22 - Coating colour preparations 18 to 22 and comparative examples 5 and 6 (C5 and C6)

Coating colors containing 100 parts of the respective powders (w/w) and 6 parts (dry/dry) of Styronal D628 (BASF, Germany) were then prepared with slurries according to Examples 13 to 17 and Comparative Examples C3 and C4 and coated on superYUPO® foils from Fischer Papier AG, Switzerland (thickness 80 μm, size: 18 x 26 cm, 62 g/m², polypropylene). The composition of the coating colours and coating weights are summarized in Table 10 below.

**Table 10**: Coating colour preparation and coating weight.

| Example | Coating colour composition | | | | Coating weight [g/m²] |
|---------|------|----------------|-----------------------------|--------------------|------------------------|
| | Slurry | Powder [parts] | Styronal D628 [parts, dry/dry] | Solid content [wt.-%] | |
| C5 | C3 | 100 | 6 | 40 | 12.4 |
| C6 | C4 | 100 | 6 | 40 | 12.0 |
| 18 | E13 | 100 | 6 | 40 | 12.6 |
| 19 | E14 | 100 | 6 | 40 | 12.6 |
| 20 | E15 | 100 | 6 | 40 | 13.2 |
| 21 | E16 | 100 | 6 | 40 | 12.8 |
| 22 | E17 | 100 | 6 | 40 | 13.1 |

6. **Antimicrobial activity**

Example 23 - fungal growth resistance test of paper coatings comprising surface-treated surface-reacted calcium carbonate

The antifungal activities of selected paper samples comprising a coating layer containing the surface-treated surface-reacted calcium carbonate of the present invention, which were prepared according to Examples 18 to 22 and C6, were tested as described in the measurement method section "Fungal growth resistance test" above.

**Table 11a:** Fungal defacement of different surface coated paper samples by *Aspergillus niger* (DSM 1957) in a fungal growth resistant test after 3 days incubation at 28 °C and 90 % relative humidity performed in triplicates.

| Test item | Rating[1] | Average Rating[1] | Average % defacement[1] |
|---|---|---|---|
| untreated test item from paper C6 | 4,5,4 | 4.3 | 47-57 % |
| Paper from Example 18 | 9, 10, 9 | 9.3 | 1-7% |
| Paper from Example 19 | 9, 9, 8 | 8.7 | 4-13% |
| [1] According to ASTM D3273-D12, average from triplicates. | | | |

**Table 11b1:** Fungal defacement of different surface coated paper samples by *Aspergillus niger* (DSM 1957) in a fungal growth resistant test after 7 days incubation at 28 °C and 90 % relative humidity performed in triplicates.

| Test item | Rating[1] | Average Rating[1] | Average % defacement[1] |
|---|---|---|---|
| untreated test item from paper C6 | 4,5,4 | 4.3 | 47-57 % |
| Paper from Example 18 | 9, 9, 9 | 9 | 1-10% |
| Paper from Example 19 | 8, 8, 8 | 8 | 11-20% |
| [1] According to ASTM D3273-D12, average from triplicates. | | | |

**Table 11b2:** Fungal defacement of different surface coated paper samples by *Aspergillus niger* (DSM 1957) in a fungal growth resistant test after 10 days incubation at 28 °C and 90 % relative humidity performed in triplicates.

| Test item | Rating[1] | Average Rating[1] | Average % defacement[1] |
|---|---|---|---|
| untreated test item from paper C6 | 4,5,4 | 4.3 | 47-57 % |
| Paper from Example 18 | 9, 9, 9 | 9 | 1-10% |
| Paper from Example 19 | 8, 8, 7 | 7.7 | 14-23% |
| [1] According to ASTM D3273-D12, average from triplicates. | | | |

**Table 11c:** Fungal defacement of different surface coated paper samples by *Aspergillus niger* (DSM 1957) in a fungal growth resistant test after 13 days incubation at 28 °C and 90 % relative humidity performed in triplicates.

| Test item | Rating[1] | Average Rating[1] | Average % defacement[1] |
|---|---|---|---|
| untreated test item from paper C6 | 4,4,4 | 4 | 51-60% |
| Paper from Example 18 | 9, 9, 9 | 9 | 1-10% |
| Paper from Example 19 | 7, 7, 7 | 7 | 21-30% |
| [1] According to ASTM D3273-D12, average from triplicates. | | | |

**Table 11d:** Fungal defacement of different surface coated paper samples by *Aspergillus niger* (DSM 1957) in a fungal growth resistant test after 18, 24, 28 and 31 days incubation at 28 °C and 90 % relative humidity performed in triplicates. The results remained the same for all four time points but are shown once only.

| Test item | Rating[1] | Average Rating[1] | Average % defacement[1] |
|---|---|---|---|
| untreated test item from paper C6 | 4,4,4 | 4 | 51-60% |
| Paper from Example 18 | 8, 8, 8 | 8 | 11-20% |
| Paper from Example 19 | 6, 6, 6 | 6 | 31-40% |
| [1] According to ASTM D3273-D12, average from triplicates. | | | |

Example 24 - Antimicrobial surface activity of paper coatings

The antimicrobial activity of selected paper samples comprising a coating layer containing the surface-treated surface-reacted calcium carbonate of the present invention, which were prepared according to Examples 18 to 22 and comparative examples C5 and C6 was tested as described in the measurement method section "Antimicrobial surface activity test" above.

Tables 12 to 14 show the cfu counts per test item and the calculated antimicrobial activity against *S. aureus* (Tables 12 and 13) and *E. coli* (Table 14) of the coated paper samples 18 to 22 as well as of comparative samples C5 and C6 (untreated test items and blends). The term LOD in Tables 12 to 14 refers to the limit of detection.

**Table 12:** Antimicrobial activity against *S. aureus* of surface-treated surface-reacted calcium carbonate.

| Test item | cfu/test item | | | | Antimicrobial activity | |
|---|---|---|---|---|---|---|
| | I | II | III | Average | R | LOD |
| untreated paper C6 | 3.0E+05 | 2.4E+05 | 2.7E+05 | 2.7E+05 | 0.00 | 4.43 |
| Paper from Example 18 | 1.0E+01 | 1.0E+01 | 1.0E+01 | 1.0E+01 | 4.43 | 4.43 |
| Paper from Example 19 | 1.0E+01 | 1.0E+01 | 1.0E+01 | 1.0E+01 | 4.43 | 4.43 |
| N/A: Not applicable. | | | | | | |

**Table 13**: Antimicrobial activity against *S. aureus* of surface-treated surface-reacted calcium carbonate.

| Test item | cfu/test item | | | | Antimicrobial activity | |
|---|---|---|---|---|---|---|
| | I | II | III | Average | R | LOD |
| untreated paper from C5 (before incubation) | 1.9E+05 | 2.2E+05 | 2.1E+05 | 2.1E+05 | N/A | N/A |
| untreated paper from C5 | 5.1E+04 | 1.1E+04 | 4.9E+04 | 3.7E+04 | 0.00 | 3.57 |
| Paper from Example 21 | 1.0E+01 | 1.0E+01 | 1.0E+01 | 1.0E+01 | 3.57 | 3.57 |
| Paper from Example 20 | 1.0E+01 | 1.0E+01 | 2.50E+01 | 1.50E+01 | 3.39 | 3.57 |
| Paper from Example 22 | 1.0E+01 | 1.0E+01 | 1.0E+01 | 1.0E+01 | 3.57 | 3.57 |
| N/A: Not applicable. | | | | | | |

**Table 14:** Antimicrobial activity against *E. coli* of surface-treated surface-reacted calcium carbonate.

| Test item | cfu/test item | | | | Antimicrobial activity | |
|---|---|---|---|---|---|---|
| | I | II | III | Average | R | LOD |
| untreated paper C6 | 3.3E+07 | 4.3E+07 | 4.1E+07 | 3.9E+07 | 0.00 | 6.59 |

(continued)

| Test item | cfu/test item | | | | Antimicrobial activity | |
|---|---|---|---|---|---|---|
| | I | II | III | Average | R | LOD |
| Paper from Example 18 | 1.0E+01 | 3.4E+03 | 1.0E+01 | 1.1E+03 | 4.54 | 6.59 |
| Paper from Example 19 | 1.0E+01 | 1.0E+01 | 1.0E+01 | 1.0E+01 | 6.59 | 6.59 |
| N/A: Not applicable. | | | | | | |

Example 25 - Antialgal activity of surface-treated surface-reacted calcium carbonate

The antialgal efficacy of various types of coatings containing surface-treated surface-reacted calcium carbonate of the present invention, which were prepared according to Examples 18 and 22 are determined according to the test norm described above. Table 15 shows the results of the test.

Table 15: Antimicrobial activity against the green algae *Stichococcus bacillaris* surface-treated surface-reacted calcium carbonate.

| | Rating of triplicates at different time points | | | |
|---|---|---|---|---|
| Test item | Day 14 | Day 21 | Day 28 | Day 32 |
| untreated test item from Example C5 | 2, 2, 2 | 2, 2, 2 | 2, 2, 2 | 2, 2, 2 |
| Paper from Example 20 | 1, 1, 1 | 1, 1, 1 | 1, 1, 1 | 1, 1, 1 |
| Paper from Example 22 | 0, 0, 0 | 0, 0, 0 | 0, 0, 0 | 0, 0, 0 |

The rating of the untreated test item is by definition 2.

**Claims**

**1.** A process for the surface-treatment of a surface-reacted calcium carbonate comprising the following steps:

(i) providing at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source,

(ii) providing at least one water soluble metal salt, wherein the water soluble metal salt is selected from the group consisting of a chromium salt, manganese salt, iron salt, cobalt salt, copper salt, zinc salt, silver salt and mixtures thereof,

(iii) providing an aqueous solvent,

(iv) contacting the at least one water soluble metal salt of step (ii) with the aqueous solvent of step (iii) to prepare a metal containing solution,

(v) contacting the at least one surface-reacted calcium carbonate of step (i) with the metal containing solution of step (iv), in one or several steps, to obtain a mixture and

(vi) heating the mixture obtained from step (v) to a temperature in the range from 50 to 180 °C to form a surface-treated surface-reacted calcium carbonate containing at least one water insoluble metal compound formed from the metal provided as metal salt in step (ii) on the surface of the surface-reacted calcium carbonate.

**2.** The process according to claim 1, wherein the surface-reacted calcium carbonate of step (i) has

(a) a specific surface area of from 15 m²/g to 200 m²/g, preferably from 27 m²/g to 180 m²/g, more preferably from 25 m²/g to 160 m²/g, and most preferably from 30 m²/g to 150 m²/g, measured using nitrogen and the BET method according to ISO 9277, and/or

(b) a volume median grain diameter $d_{50}$(vol) of from 1 to 75 μm, preferably from 1.3 to 50 μm, more preferably from 1.5 to 40 μm, even more preferably from 1.8 to 30 μm, and most preferably from 2 to 15 μm, and/or

(c) a grain diameter $d_{98}$(vol) of from 2 to 150 $\mu$m, preferably from 4 to 100 $\mu$m, more preferably 6 to 80 $\mu$m, even more preferably from 8 to 60 $\mu$m, and most preferably from 10 to 30 $\mu$m, and/or

(d) an intra-particle intruded specific pore volume in the range from 0.1 to 2.3 cm$^3$/g, more preferably from 0.2 to 2.0 cm$^3$/g, especially preferably from 0.4 to 1.8 cm$^3$/g and most and preferably from 0.6 to 1.6 cm$^3$/g, calculated from mercury porosimetry measurement.

3. The process according to any of the preceding claims, wherein the surface-reacted calcium carbonate of step (i) has

(a) a specific surface area of from 30 m$^2$/g to 150 m$^2$/g, measured using nitrogen and the BET method according to ISO 9277, and

(b) a volume median grain diameter $d_{50}$(vol) of from 2 to 15 $\mu$m, and optionally

(c) a grain diameter $d_{98}$(vol) of from 10 to 30 $\mu$m, and optionally

(d) an intra-particle intruded specific pore volume in the range from 0.6 to 1.6 cm$^3$/g, calculated from mercury porosimetry measurement.

4. The process according to any of the preceding claims, wherein the surface-reacted calcium carbonate of step (i) is provided in dry form, preferably in powder form or is provided in form of a suspension, preferably in form of an aqueous suspension wherein the solids content of the surface-reacted calcium carbonate is within the range of from 1 to 80 wt.-%, more preferably from 3 to 70 wt.-%, and even more preferably from 5 to 60 wt.-%, based on the total weight of the aqueous suspension.

5. The process according to any of the preceding claims, wherein the surface-reacted calcium carbonate of step (i) is heated to a temperature in the range from 20 to 250 °C, preferably from 25 to 180 °C, even more preferably from 50 to 150 °C and most preferably from 80 to 130 °C prior or during to the contacting step (v).

6. The process according to any of the preceding claims, wherein the at least one water soluble metal salt of step (ii) is selected from the group consisting of a copper salt, zinc salt, silver salt and mixtures thereof, even more preferably is a copper salt selected from the group consisting of copper nitrate, copper sulphate, copper acetate, copper chloride, copper fluoride, copper bromide, hydrates thereof and mixtures thereof, and most preferably is selected from the group consisting of copper sulphate, hydrates thereof and mixtures thereof.

7. The process according to any of the preceding claims, wherein the at least one metal salt is added to the at least one surface-reacted calcium carbonate in an amount from 0.001 to 80 wt.-%, preferably from 0.01 to 60 wt.-%, and more preferably from 0.05 to 50 wt.-% and most preferably from 1 to 40 wt.-%, based on the total dry weight of the at least one surface-reacted calcium carbonate.

8. The process according to any of the preceding claims, wherein the contacting step (v) is performed by mixing and/or by spraying.

9. The process according to any of the preceding claims, wherein the mixture obtained from step (v) is heated in step (vi) to a temperature in the range from 60 to 160 °C, even more preferably from 80 to 150 °C and most preferably from 90 to 130 °C.

10. The process according to any of the preceding claims, wherein before and/or during step (v) a base in form of an aqueous solution or aqueous suspension is added to the at least one surface-reacted calcium carbonate of step (i), wherein the base preferably comprises carbonate ions and most preferably the base is sodium carbonate, and wherein preferably the base is added in an amount from 0.001 to 80 wt.-%, preferably from 0.01 to 60 wt.-%, more preferably from 0.05 to 50 wt.-%, and most preferably from 1 to 40 wt.-% based on the total dry weight of the at least one surface-reacted calcium carbonate.

11. The process according to any of the preceding claims, wherein the at least one water soluble metal salt of step (ii) is copper sulphate, hydrates thereof or mixtures thereof and/or the at least one water insoluble metal compound formed on the surface of the surface-reacted calcium carbonate is copper hydrogen phosphate hydrate ($CuHPO_4 \cdot H_2O$), and preferably the at least one water soluble metal salt of step (ii) is zinc sulphate and/or zinc chloride, hydrates thereof or mixtures thereof.

12. A surface-treated surface-reacted calcium carbonate containing at least one water insoluble metal compound formed from a metal provided as metal salt immobilized on the surface of the surface-reacted calcium carbonate, wherein the metal salt is a water soluble metal salt selected from the group consisting of a chromium salt, manganese salt, iron salt, cobalt salt, copper salt, zinc salt, silver salt and mixtures thereof.

13. The surface-treated surface-reacted calcium carbonate according to claim 12, having

(a) a specific surface area of from 30 m$^2$/g to 150 m$^2$/g, measured using nitrogen and the BET method according to ISO 9277, and
(b) a volume median grain diameter $d_{50}$(vol) of from 2 to 15 $\mu$m, and optionally
(c) a grain diameter $d_{98}$(vol) of from 10 to 30 $\mu$m, and optionally
(d) an intra-particle intruded specific pore volume in the range from 0.6 to 1.6 cm$^3$/g, calculated from mercury porosimetry measurement.

14. The surface-treated surface-reacted calcium carbonate according to claims 12 to 13, comprising at least one compound selected from the group consisting of copper hydrogen phosphate hydrate ($CuHPO_4 \cdot H_2O$), malachite ($Cu_2CO_3(OH)_2$), brochantite ($Cu_4SO_4(OH)_6$), deviline ($CaCu_4(SO_4)_2(OH)_6 \cdot 3H_2O$), posnjakite ($Cu_4(SO_4)(OH)_6 \cdot H_2O$) and mixtures thereof as water insoluble metal compound formed on the surface of the surface-reacted calcium carbonate, and/or comprising at least one insoluble zinc salt on the surface of the surface-reacted calcium carbonate.

15. A composition comprising a surface-treated surface-reacted calcium carbonate according to claims 12 to 14.

16. Use of at least one surface-reacted calcium carbonate, wherein the surface-reacted calcium carbonate is a reaction product of natural ground or precipitated calcium carbonate with carbon dioxide and one or more $H_3O^+$ ion donors in an aqueous medium, wherein the carbon dioxide is formed in situ by the $H_3O^+$ ion donor treatment and/or is supplied from an external source, for immobilizing at least one water soluble metal salt on the surface of the at least one surface-reacted calcium carbonate by preparing at least one surface-treated surface-reacted calcium carbonate in accordance with the process of claims 1 to 11.

17. Use of a surface-treated surface-reacted calcium carbonate according to claims 12 to 14 or a composition according to claim 15 as preservative, for the control of odour, and/or for enhancing and/or mediating antimicrobial activity of a substrate, wherein preferably the odorants are selected from the group consisting of amines such as triethylamine, diethylamine, trimethylamine, diaminobutane, tetramethylenediamine, pentamethylenediamine, pyridine, indole, 3-methylindole; carboxylic acids such as propionic acid, butanoic acid, 3-methylbutanoic acid, 2-methylpropanoic acid, hexanoic acid; sulphur organic compounds such as thiols, e.g. methanethiol, phosphor organic compounds such as methylphosphine, dimethylphosphine, their derivatives and mixtures thereof; preferably the odorants are amines and most preferably the odorant is diethylamine.

18. Use of a surface-treated surface-reacted calcium carbonate according to claims 12 to 14 or a composition according to claim 15 in polymer applications, paper coating applications, paper making, paints, coatings, sealants, printing inks, adhesives, food, feed, pharmaceuticals, concrete, cement, cosmetics, water treatment, engineered wood applications, plasterboard applications, packaging applications and/or agricultural applications.

19. An article comprising a surface-treated surface-reacted calcium carbonate according to claims 12 to 14 or a composition according to claim 15, wherein the article is selected from paper products, engineered wood products, plasterboard products, polymer products, hygiene products, medical products, healthcare products, filter products, woven materials, nonwoven materials, geotextile products, agriculture products, horticulture products, clothing, footwear products, baggage products, household products, industrial products, packaging products, building products, and construction products.

**Patentansprüche**

1. Verfahren zur Oberflächenbehandlung eines oberflächenreagierten Calciumcarbonats, umfassend die folgenden Schritte:

(i) Bereitstellen von mindestens einem oberflächenreagierten Calciumcarbonat, wobei das oberflächenreagierte Calciumcarbonat ein Reaktionsprodukt von natürlichem gemahlenen oder gefällten Calciumcarbonat mit Kohlendioxid und einem oder mehreren $H_3O^+$ Ionenspendern in einem wässrigen Medium ist, wobei das Kohlendioxid in situ durch die $H_3O^+$ Ionenspenderbehandlung gebildet ist und/oder von einer externen Quelle bereitgestellt ist,

(ii) Bereitstellen von mindestens einem wasserlöslichen Metallsalz, wobei das wasserlösliche Metallsalz ausgewählt ist aus der Gruppe bestehend aus einem Chromsalz, Mangansalz, Eisensalz, Kobaltsalz, Kupfersalz, Zinksalz, Silbersalz und Gemischen davon,

(iii) Bereitstellen eines wässrigen Lösungsmittels,

(iv) Kontaktieren des mindestens einen wasserlöslichen Metallsalzes von Schritt (ii) mit dem wässrigen Lösungsmittel von Schritt (iii), um eine metallhaltige Lösung herzustellen,

(v) Kontaktieren des mindestens einen oberflächenreagierten Calciumcarbonats von Schritt (i) mit der metallhaltigen Lösung von Schritt (iv) in einem oder mehreren Schritten, um ein Gemisch zu erhalten und

(vi) Erwärmen des aus Schritt (v) erhaltenen Gemischs auf eine Temperatur im Bereich von 50 bis 180 °C, um ein oberflächenbehandeltes, oberflächenreagiertes Calciumcarbonat zu bilden, das mindestens eine wasserunlösliche Metallverbindungenthält, gebildet aus dem Metall, das als Metallsalz in Schritt (ii) bereitgestellt ist, an der Oberfläche des oberflächenreagierten Calciumcarbonats.

2. Verfahren nach Anspruch 1, wobei das oberflächenreagierte Calciumcarbonat von Schritt (i) Folgendes aufweist

(a) einen spezifischen Oberflächenbereich von 15 m$^2$/g bis 200 m$^2$/g, bevorzugt von 27 m$^2$/g bis 180 m$^2$/g, mehr bevorzugt von 25 m$^2$/g bis 160 m$^2$/g und besonders bevorzugt von 30 m$^2$/g bis 150 m$^2$/g, gemessen unter Verwendung von Stickstoff und dem BET-Verfahren nach ISO 9277, und/oder

(b) einen mittleren Volumenkorndurchmesser $d_{50}$(vol) von 1 bis 75 $\mu$m, bevorzugt von 1,3 bis 50 $\mu$m, bevorzugter von 1,5 bis 40 $\mu$m, noch bevorzugter von 1,8 bis 30 $\mu$m und besonders bevorzugt von 2 bis 15 $\mu$m, und/oder

(c) einen Korndurchmesser $d_{98}$(vol) von 2 bis 150 pm, bevorzugt von 4 bis 100 $\mu$m, bevorzugter 6 bis 80 $\mu$m, noch bevorzugter von 8 bis 60 $\mu$m und besonders bevorzugt von 10 bis 30 $\mu$m, und/oder

(d) ein spezifisches Intrapartikel-Eindringungsporenvolumen im Bereich von 0,1 bis 2,3 cm$^3$/g, bevorzugter von 0,2 bis 2,0 cm$^3$/g, insbesondere bevorzugt von 0,4 bis 1,8 cm$^3$/g und besonders bevorzugt von 0,6 bis 1,6 cm$^3$/g, errechnet aus einer Porosimetermessung.

3. Verfahren nach einem der vorstehenden Ansprüche, wobei das oberflächenreagierte Calciumcarbonat von Schritt (i) Folgendes aufweist

(a) einen spezifischen Oberflächenbereich von 30 m$^2$/g bis 150 m$^2$/g, gemessen unter Verwendung von Stickstoff und dem BET-Verfahren nach ISO 9277, und

(b) einen mittleren Volumenkorndurchmesser $d_{50}$(vol) von 2 bis 15 $\mu$m, und optional

(c) einen Korndurchmesser $d_{98}$(vol) von 10 bis 30 $\mu$m, und optional

(d) ein spezifisches Intrapartikel-Eindringungsporenvolumen im Bereich von 0,6 bis 1,6 cm$^3$/g, errechnet aus einer Porosimetermessung.

4. Verfahren nach einem der vorstehenden Ansprüche, wobei das oberflächenreagierte Calciumcarbonat von Schritt (i) in trockener Form bereitgestellt ist, bevorzugt in Pulverform, oder in Form von einer Suspension bereitgestellt ist, bevorzugt in Form einer wässrigen Suspension, wobei der Feststoffgehalt des oberflächenreagierten Calciumcarbonats innerhalb des Bereichs von 1 bis 80 Gew.-%, bevorzugter von 3 bis 70 Gew.-% und noch bevorzugter von 5 bis 60 Gew.-%, basierend auf dem Gesamtgewicht der wässrigen Suspension, beträgt.

5. Verfahren nach einem der vorstehenden Ansprüche, wobei das oberflächenreagierte Calciumcarbonat von Schritt (i) auf eine Temperatur im Bereich von 20 bis 250 °C, bevorzugt von 25 bis 180 °C, bevorzugter von 50 bis 150 °C und besonders bevorzugt von 80 bis 130 °C vor oder während dem Kontaktierungsschritt (v) erhitzt wird.

6. Verfahren nach einem der vorstehenden Ansprüche, wobei das mindestens eine wasserlösliche Metallsalz von Schritt (ii) ausgewählt ist aus der Gruppe bestehend aus einem Kupfersalz, Zinksalz, Silbersalz und Gemischen davon, wobei dies bevorzugter ein Kupfersalz ist, das ausgewählt ist aus der Gruppe bestehend aus Kupfernitrat, Kupfersulfat, Kupferacetat, Kupferchlorid, Kupferfluorid, Kupferbromid, Hydraten davon und Gemischen davon, und besonders bevorzugt ausgewählt ist aus der Gruppe bestehend aus Kupfersulfat, Hydraten davon und Gemischen davon.

7. Verfahren nach einem der vorstehenden Ansprüche, wobei das mindestens eine Metallsalz zu dem mindestens einen oberflächenreagierten Calciumcarbonat in einer Menge von 0,001 bis 80 Gew.-%, bevorzugt von 0,01 bis 60 Gew.-%, und bevorzugter von 0,05 bis 50 Gew.-% und besonders bevorzugt von 1 bis 40 Gew.-%, basierend auf dem Gesamttrockengewicht des mindestens einen oberflächenreagierten Calciumcarbonats, zugesetzt wird.

8. Verfahren nach einem der vorstehenden Ansprüche, wobei der Kontaktierungsschritt (v) durch Mischen und/oder durch Sprühen durchgeführt wird.

9. Verfahren nach einem der vorstehenden Ansprüche, wobei das aus Schritt (v) erhaltene Gemisch in Schritt (vi) auf eine Temperatur im Bereich von 60 bis 160 °C, noch bevorzugter von 80 bis 150 °C und besonders bevorzugt von 90 bis 130 °C erhitzt wird.

10. Verfahren nach einem der vorstehenden Ansprüche, wobei vor und/oder während Schritt (v) eine Base in Form einer wässrigen Lösung oder wässrigen Suspension zu dem mindestens einen oberflächenreagierten Calciumcarbonat von Schritt (i) zugesetzt wird, wobei die Base bevorzugt Carbonationen umfasst und wobei die Base besonders bevorzugt Natriumcarbonat ist, und wobei die Base bevorzugt in einer Menge von 0,001 bis 80 Gew.-%, bevorzugt von 0,01 bis 60 Gew.-%, bevorzugter von 0,05 bis 50 Gew.-%, und besonders bevorzugt von 1 bis 40 Gew.-%, basierend auf dem Gesamttrockengewicht des mindestens einen oberflächenreagierten Calciumcarbonats, zugesetzt wird.

11. Verfahren nach einem der vorstehenden Ansprüche, wobei das mindestens eine wasserlösliche Metallsalz von Schritt (ii) Kupfersulfat, Hydrate davon oder Gemische davon ist und/oder wobei die mindestens eine wasserunlösliche Metallverbindung, die an der Oberfläche des oberflächenreagierten Calciumcarbonats gebildet ist, Wasserstoffkupferphosphathydrat ($CuHPO_4 \cdot H_2O$) ist, und bevorzugt das mindestens eine wasserlösliche Metallsalz von Schritt (ii) Zinksulfat und/oder Zinkchlorid, Hydrate davon oder Gemischen davon ist.

12. Oberflächenbehandeltes, oberflächenreagiertes Calciumcarbonat, das mindestens eine wasserunlösliche Metallverbindung enthält, die aus einem Metall gebildet ist, das als ein Metallsalz bereitgestellt ist, das an der Oberfläche des oberflächenreagierten Calciumcarbonats immobilisiert ist, wobei das Metallsalz ein wasserlösliches Metallsalz ist, das ausgewählt ist aus der Gruppe bestehend aus einem Chromsalz, Mangansalz, Eisensalz Kobaltsalz, Kupfersalz, Zinksalz, Silbersalz und Gemischen davon.

13. Oberflächenbehandeltes, oberflächenreagiertes Calciumcarbonat nach Anspruch 12, das Folgendes aufweist

   (a) einen spezifischen Oberflächenbereich von 30 $m^2$/g bis 150 $m^2$/g, gemessen unter Verwendung von Stickstoff und dem BET-Verfahren nach ISO 9277, und
   (b) einen mittleren Volumenkorndurchmesser $d_{50}$(vol) von 2 bis 15 $\mu$m, und optional
   (c) einen Korndurchmesser $d_{98}$(vol) von 10 bis 30 $\mu$m, und optional
   (d) ein spezifisches Intrapartikel-Eindringungsporenvolumen im Bereich von 0,6 bis 1,6 $cm^3$/g, errechnet aus einer Porosimetermessung.

14. Oberflächenbehandeltes, oberflächenreagiertes Calciumcarbonat nach den Ansprüchen 12 bis 13, umfassend mindestens eine Verbindung, die ausgewählt ist aus der Gruppe bestehend aus Wasserstoffkupferphosphathydrat ($CuHPO_4 \cdot H_2O$), Malachit ($Cu_2CO_3(OH)_2$), Brochantit ($Cu_4SO_4(OH)_6$), Devilin ($CaCu_4(SO_4)_2(OH)_6 \cdot 3H_2O$), Posnjakit ($CU_4(SO_4)(OH)_6 \cdot H_2O$) und Gemischen davon als eine wasserunlösliche Metallverbindung, die an der Oberfläche des oberflächenreagierten Calciumcarbonats gebildet ist, und/oder umfassend mindestens ein unlösliches Zinksalz an der Oberfläche des oberflächenreagierten Calciumcarbonats.

15. Zusammensetzung, umfassend ein oberflächenbehandeltes, oberflächenreagiertes Calciumcarbonat nach den Ansprüchen 12 bis 14.

16. Verwendung von mindestens einem oberflächenreagierten Calciumcarbonat, wobei das oberflächenreagierte Calciumcarbonat ein Reaktionsprodukt von natürlichem gemahlenen oder gefällten Calciumcarbonat mit Kohlendioxid und einem oder mehreren $H_3O^+$ Ionenspendern in einem wässrigen Medium ist, wobei das Kohlendioxid in situ durch die $H_3O^+$ Ionenspenderbehandlung gebildet wird und/oder von einer externen Quelle bereitgestellt wird, zum Immobilisieren von mindestens einem wasserlöslichen Metallsalz an der Oberfläche des mindestens einen oberflächenreagierten Calciumcarbonats durch Herstellen von mindestens einem oberflächenbehandelten, oberflächenreagierten Calciumcarbonat gemäß dem Verfahren von der Ansprüche 1 bis 11.

17. Verwendung eines oberflächenbehandelten, oberflächenreagierten Calciumcarbonats nach den Ansprüchen 12 bis 14 oder eine Zusammensetzung nach Anspruch 15, als ein Konservierungsmittel zur Geruchsbekämpfung und/oder zum Verbessern und/oder Vermitteln einer antimikrobiellen Aktivität eines Substrats, wobei die Odoranten bevorzugt ausgewählt sind aus der Gruppe bestehend aus Aminen, wie z. B. Triethylamin, Diethylamin, Trimethylamin, Diaminbutan, Tetramethylendiamin, Pentamethylendiamin, Pyridin, Indol, 3-Methylindol; Carbonsäuren, wie z. B. Propionsäure, Butansäure, 3-Methylbutansäure, 2-Methylpropansäure, Hexansäure; organische Schwefelverbindungen, wie z. B. Thiole, z. B. Methanthiol, organische Phosphorverbindungen, wie z. B. Methylphosphin, Dimethylphosphin, deren Derivate und Gemische davon; wobei die Odoranten bevorzugt Amine sind und das Odorant besonders bevorzugt Diethylamin ist.

18. Verwendung eines oberflächenbehandelten, oberflächenreagierten Calciumcarbonats nach den Ansprüchen 12 bis 14 oder eine Zusammensetzung nach Anspruch 15 in Polymeranwendungen, Papierbeschichtungsanwendungen, Papierherstellung, Farben, Beschichtungen, Dichtungsstoffen, Druckerfarben, Klebstoffen, Lebensmitteln, Futter, Pharmazeutika, Beton, Zement, Kosmetika, Wasserbehandlung, bautechnischen Holzanwendungen, Gipskartonanwendungen, Verpackungsanwendungen und/oder landwirtschaftlichen Anwendungen.

19. Gegenstand, umfassend ein oberflächenbehandeltes, oberflächenreagiertes Calciumcarbonat nach den Ansprüchen 12 bis 14 oder eine Zusammensetzung nach Anspruch 15, wobei der Gegenstand ausgewählt ist aus Papierprodukten, bautechnischen Holzprodukten, Gipskartonprodukten, Polymerprodukten, Hygieneprodukten, medizinischen Produkten, medizinischen Versorgungsprodukten, Filterprodukten, Gewebe, Vlies, Geotextilprodukten, landwirtschaftlichen Produkten, Gartenbauprodukten, Bekleidung, Schuhprodukten, Gepäckprodukten, Haushaltsprodukten, Industrieprodukten, Verpackungsprodukten, Baugewerbeprodukten und Konstruktionsprodukten.

## Revendications

1. Procédé de traitement de surface d'un carbonate de calcium ayant réagi en surface comprenant les étapes suivantes de:

(i) fournir au moins un carbonate de calcium ayant réagi en surface, dans lequel le carbonate de calcium ayant réagi en surface est un produit de réaction d'un carbonate de calcium broyé naturel ou précipité avec du dioxyde de carbone et un ou plusieurs donneurs d'ions $H_3O^+$ dans un milieu aqueux, dans lequel le dioxyde de carbone est formé in situ par le traitement avec le donneur d'ions $H_3O^+$ et/ou est fourni à partir d'une source externe,
(ii) fournir au moins un sel métallique hydrosoluble, dans lequel le sel métallique hydrosoluble est sélectionné dans le groupe consistant en un sel de chrome, un sel de manganèse, un sel de fer, un sel de cobalt, un sel de cuivre, un sel de zinc, un sel d'argent et les mélanges de ceux-ci,
(iii) fournir un solvant aqueux,
(iv) mettre en contact le au moins un sel métallique hydrosoluble de l'étape (ii) avec le solvant aqueux de l'étape (iii) pour préparer une solution contenant un métal,
(v) mettre en contact le au moins un carbonate de calcium ayant réagi en surface de l'étape (i) avec la solution contenant un métal de l'étape (iv), en une ou plusieurs étapes, pour obtenir un mélange et
(vi) chauffer le mélange obtenu dans l'étape (v) à une température dans la plage de 50 à 180 °C pour former un carbonate de calcium ayant réagi en surface et traité en surface contenant au moins un composé métallique insoluble dans l'eau formé à partir du métal fourni sous forme de sel métallique dans l'étape (ii) sur la surface du carbonate de calcium ayant réagi en surface.

2. Procédé selon la revendication 1, dans lequel le carbonate de calcium ayant réagi en surface de l'étape (i) présente

(a) une surface spécifique de 15 m²/g à 200 m²/g, de préférence de 27 m²/g à 180 m²/g, plus préférentiellement de 25 m²/g à 160 m²/g, et le plus préférentiellement de 30 m²/g à 150 m²/g, mesurés en utilisant de l'azote et le procédé BET conformément à l'ISO 9277, et/ou
(b) un diamètre de grain médian en volume $d_{50}$ (vol) de 1 à 75 $\mu$m, de préférence de 1,3 à 50 $\mu$m, plus préférentiellement de 1,5 à 40 $\mu$m, encore plus préférentiellement de 1,8 à 30 $\mu$m, et le plus préférentiellement de 2 à 15 $\mu$m, et/ou
(c) un diamètre de grain $d_{98}$(vol) de 2 à 150 $\mu$m, de préférence de 4 à 100 $\mu$m, plus préférentiellement de 6 à 80 $\mu$m, encore plus préférentiellement de 8 à 60 $\mu$m, et le plus préférentiellement de 10 à 30 $\mu$m, et/ou
(d) un volume de pore spécifique intraparticulaire par intrusion dans la plage de 0,1 à 2,3 cm³/g, plus préférentiellement de 0,2 à 2,0 cm³/g, de manière particulièrement préférée de 0,4 à 1,8 cm³/g et le plus préférentiellement de 0,6 à 1,6 cm³/g, calculé à partir d'une mesure de porosimétrie avec du mercure.

3. Procédé selon l'une quelconque des revendications précédentes, dans lequel le carbonate de calcium ayant réagi en surface de l'étape (i) présente

(a) une surface spécifique de 30 m$^2$/g à 150 m$^2$, mesurée en utilisant de l'azote et le procédé BET conformément à l'ISO 9277, et

(b) un diamètre de grain médian en volume $d_{50}$(vol) de 2 à 15 $\mu$m, et facultativement

(c) un diamètre de grain $d_{98}$(vol) de 10 à 30 $\mu$m, et facultativement

(d) un volume de pore spécifique intraparticulaire par intrusion dans la plage de 0,6 à 1,6 cm$^3$/g, calculé à partir d'une mesure de porosimétrie avec du mercure.

4. Procédé selon l'une quelconque des revendications précédentes, dans lequel le carbonate de calcium ayant réagi en surface de l'étape (i) est fourni sous une forme sèche, de préférence sous la forme d'une poudre ou est fourni sous la forme d'une suspension, de préférence sous la forme d'une suspension aqueuse dans lequel la teneur en solides du carbonate de calcium ayant réagi en surface est dans la plage de 1 à 80 % en poids, plus préférentiellement de 3 à 70 % en poids, et encore plus préférentiellement de 5 à 60 % en poids, sur la base du poids total de la suspension aqueuse.

5. Procédé selon l'une quelconque des revendications précédentes, dans lequel le carbonate de calcium ayant réagi en surface de l'étape (i) est chauffé à une température dans la plage de 20 à 250 °C, de préférence de 25 à 180 °C, encore plus préférentiellement de 50 à 150 °C et le plus préférentiellement de 80 à 130 °C avant ou pendant l'étape (v) de mise en contact.

6. Procédé selon l'une quelconque des revendications précédentes, dans lequel le au moins un sel métallique hydrosoluble de l'étape (ii) est sélectionné dans le groupe consistant en un sel de cuivre, un sel de zinc, un sel d'argent et les mélanges de ceux-ci, encore plus préférentiellement est un sel de cuivre sélectionné dans le groupe consistant en le nitrate de cuivre, le sulfate de cuivre, l'acétate de cuivre, le chlorure de cuivre, le fluorure de cuivre, le bromure de cuivre, les hydrates de ceux-ci et les mélanges de ceux-ci, et le plus préférentiellement est sélectionné dans le groupe consistant en le sulfate de cuivre, les hydrates de celui-ci et les mélanges de ceux-ci.

7. Procédé selon l'une quelconque des revendications précédentes, dans lequel le au moins un sel métallique est ajouté au au moins un carbonate de calcium ayant réagi en surface en une quantité de 0,001 à 80 % en poids, de préférence de 0,01 à 60 % en poids, et plus préférentiellement de 0,05 à 50 % en poids et le plus préférentiellement de 1 à 40 % en poids, sur la base du poids sec total du au moins un carbonate de calcium ayant réagi en surface.

8. Procédé selon l'une quelconque des revendications précédentes, dans lequel l'étape (v) de mise en contact est effectuée par mélange et/ou par pulvérisation.

9. Procédé selon l'une quelconque des revendications précédentes, dans lequel le mélange obtenu dans l'étape (v) est chauffé dans l'étape (vi) à une température dans la plage de 60 à 160 °C, encore plus préférentiellement de 80 à 150 °C et le plus préférentiellement de 90 à 130 °C.

10. Procédé selon l'une quelconque des revendications précédentes, dans lequel avant et/ou pendant l'étape (v), une base sous la forme d'une solution aqueuse ou d'une suspension aqueuse est ajoutée au au moins un carbonate de calcium ayant réagi en surface de l'étape (i), dans lequel la base comprend de préférence des ions carbonate et le plus préférentiellement la base est le carbonate de sodium, et dans lequel de préférence la base est ajoutée en une quantité de 0,001 à 80 % en poids, de préférence de 0,01 à 60 % en poids, plus préférentiellement de 0,05 à 50 % en poids, et le plus préférentiellement de 1 à 40 % en poids sur la base du poids sec total du au moins un carbonate de calcium ayant réagi en surface.

11. Procédé selon l'une quelconque des revendications précédentes, dans lequel le au moins un sel métallique hydrosoluble de l'étape (ii) est le sulfate de cuivre, les hydrates de celui-ci ou les mélanges de ceux-ci et/ou le au moins un composé métallique insoluble dans l'eau formé sur la surface du carbonate de calcium ayant réagi en surface est l'hydrogénophosphate de cuivre hydraté ($CuHPO_4 \cdot H_2O$), et de préférence le au moins un sel métallique hydrosoluble de l'étape (ii) est le sulfate de zinc et/ou le chlorure de zinc, les hydrates de ceux-ci ou les mélanges de ceux-ci.

12. Carbonate de calcium ayant réagi en surface et traité en surface contenant au moins un composé métallique insoluble dans l'eau formé à partir d'un métal fourni sous forme d'un sel métallique immobilisé sur la surface du carbonate de calcium ayant réagi en surface, dans lequel le sel métallique est un sel métallique hydrosoluble sélectionné dans le groupe consistant en un sel de chrome, un sel de manganèse, un sel de fer, un sel de cobalt, un sel de cuivre, un sel de zinc, un sel d'argent et les mélanges de ceux-ci.

**13.** Carbonate de calcium ayant réagi en surface et traité en surface selon la revendication 12, présentant

(a) une surface spécifique de 30 m$^2$/g à 150 m$^2$, mesurée en utilisant de l'azote et le procédé BET conformément à l'ISO 9277, et
(b) un diamètre de grain médian en volume $d_{50}$(vol) de 2 à 15 $\mu$m, et facultativement
(c) un diamètre de grain $d_{98}$(vol) de 10 à 30 $\mu$m, et facultativement
(d) un volume de pore spécifique intraparticulaire par intrusion dans la plage de 0,6 à 1,6 cm$^3$/g, calculé à partir d'une mesure de porosimétrie avec du mercure.

**14.** Carbonate de calcium ayant réagi en surface et traité en surface selon les revendications 12 à 13, comprenant au moins un composé sélectionné dans le groupe consistant en l'hydrogénophosphate de cuivre hydraté (CuHPO$_4$·H$_2$O), la malachite (Cu$_2$CO$_3$(OH)$_2$), la brochantite (Cu$_4$SO$_4$(OH)$_6$), la deviline (CaCu$_4$(SO$_4$)$_2$(OH)$_6$·3H$_2$O), la posnjakite (CU$_4$(SO$_4$)(OH)$_6$·H$_2$O) et les mélanges de ceux-ci en tant que composé métallique insoluble dans l'eau formé sur la surface du carbonate de calcium ayant réagi en surface, et/ou comprenant au moins un sel de zinc insoluble sur la surface du carbonate de calcium ayant réagi en surface.

**15.** Composition comprenant un carbonate de calcium ayant réagi en surface et traité en surface selon les revendications 12 à 14.

**16.** Utilisation d'au moins un carbonate de calcium ayant réagi en surface, dans laquelle le carbonate de calcium ayant réagi en surface est un produit de réaction d'un carbonate de calcium broyé naturel ou précipité avec du dioxyde de carbone et un ou plusieurs donneurs d'ions H$_3$O$^+$ dans un milieu aqueux, dans laquelle le dioxyde de carbone est formé in situ par le traitement avec le donneur d'ions H$_3$O$^+$ et/ou est fourni à partir d'une source externe, pour immobiliser au moins un sel métallique hydrosoluble sur la surface du au moins un carbonate de calcium ayant réagi en surface en préparant au moins un carbonate de calcium ayant réagi en surface et traité en surface selon le procédé des revendications 1 à 11.

**17.** Utilisation d'un carbonate de calcium ayant réagi en surface et traité en surface selon les revendications 12 à 14 ou d'une composition selon la revendication 15 comme conservateur, pour lutter contre les odeurs, et/ou pour augmenter et/ou médier une activité antimicrobienne d'un substrat, dans laquelle de préférence les substances odorantes sont sélectionnées dans le groupe consistant en les amines telles que la triéthylamine, la diéthylamine, la triméthylamine, le diaminobutane, la tétraméthylènediamine, la pentaméthylènediamine, la pyridine, l'indole, le 3-méthylindole ; les acides carboxyliques tels que l'acide propionique, l'acide butanoïque, l'acide 3-méthylbutanoïque, l'acide 2-méthylpropanoïque, l'acide hexanoïque ; les composés organiques soufrés tels que les thiols, par exemple le méthanethiol, les composés organiques phosphorés tels que la méthylphosphine, la diméthylphosphine, leurs dérivés et les mélanges de ceux-ci ; de préférence, les substances odorantes sont des amines et le plus préférentiellement la substance odorante est la diéthylamine.

**18.** Utilisation d'un carbonate de calcium ayant réagi en surface et traité en surface selon les revendications 12 à 14 ou d'une composition selon la revendication 15 dans des applications de polymères, des applications de revêtement de papier, la fabrication de papier, les peintures, les revêtements, les produits d'étanchéité, les encres d'imprimerie, les adhésifs, les denrées alimentaires, les aliments pour animaux, les produits pharmaceutiques, le béton, le ciment, les cosmétiques, le traitement de l'eau, des applications de bois d'ingénierie, des applications de plaques de plâtre, des applications d'emballage et/ou des applications agricoles.

**19.** Article comprenant un carbonate de calcium ayant réagi en surface et traité en surface selon les revendications 12 à 14 ou une composition selon la revendication 15, dans lequel l'article est sélectionné parmi les produits en papier, les produits en bois d'ingénierie, les produits en plaques de plâtre, les produits polymères, les produits d'hygiène, les produits médicaux, les produits de soin de santé, les produits filtrants, les matériaux tissés, les matériaux non tissés, les produits géotextiles, les produits agricoles, les produits horticoles, les vêtements, les produits chaussants, les produits pour bagages, les produits ménagers, les produits industriels, les produits d'emballage, les produits pour bâtiment et les produits de construction.

**diethylamine relative amount after test**

Fig.1

**2-propanethiol relative amount after test**

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1084203 A
- EP 2029675 A
- EP 2921173 A
- US 20120202684 A
- EP 2447213 A1
- EP 2524898 A1
- EP 2371766 A1
- EP 2840065 A1
- WO 2013142473 A1
- WO 0039222 A1
- WO 2004083316 A1
- WO 2005121257 A2
- WO 2009074492 A1
- EP 2264108 A1
- EP 2264109 A1
- US 20040020410 A1
- EP 2159258 A1
- EP 2390285 A1
- EP 2390280 A1
- WO 2014060286 A1
- WO 2014128087 A1
- EP 2722368 A1
- EP 2770017 A1

**Non-patent literature cited in the description**

- **KATHLEEN LATTAUD et al.** Index of refraction enhancement of calcite particles coated with zinc carbonate. *Solid State Science,* 2006, vol. 8 (10), 1222-1228
- **P.PAPADOPOULUS et al.** The reactions of copper and zinc with calcium carbonate surfaces. *Journal of Soil Science,* 1989, vol. 40, 39-48
- **GANE, P.A.C. ; KETTLE, J.P. ; MATTHEWS, G.P. ; RIDGWAY, C.J.** Void Space Structure of Compressible Polymer Spheres and Consolidated Calcium Carbonate Paper-Coating Formulations. *Industrial and Engineering Chemistry Research,* 1996, vol. 35 (5), 1753-1764
- *CHEMICAL ABSTRACTS,* 109-89-7
- *CHEMICAL ABSTRACTS,* 75-33-2